(19) Europäisches Patentamt
European Patent Office
Office européen des brevets

(11) Veröffentlichungsnummer: **0 012 111**
**B1**

# (12) EUROPÄISCHE PATENTSCHRIFT

(45) Veröffentlichungstag der Patentschrift: **08.06.83**

(21) Anmeldenummer: **79810159.8**

(22) Anmeldetag: **19.11.79**

(51) Int. Cl.³: **C 09 B 62/00,** C 09 B 1/54, D 06 P 3/04, C 07 C 143/00, C 07 C 139/00

## (54) Wasserlösliche Farbstoffe der 1-Amino-2-phenoxy-4-phenylamino-anthrachinonreihe und Verfahren zu deren Herstellung und deren Verwendung.

(30) Priorität: **24.11.78 CH 12068/78**

(43) Veröffentlichungstag der Anmeldung: **11.06.80 Patentblatt 80/12**

(45) Bekanntmachung des Hinweises auf die Patenterteilung: **08.06.83 Patentblatt 83/23**

(84) Benannte Vertragsstaaten: **BE CH DE FR GB**

(56) Entgegenhaltungen:
**DE-C-158 531**
**DE-C-263 423**
**DE-C-680 093**
**FR-A-1 593 857**
**FR-A-2 392 082**
**FR-A-2 408 586**
**GB-A-678 983**
**GB-A-2 000 801**
**US-A-3 491 125**

**Houben-Weyl: Methoden der org. Chemie, Bd. VII/3c (1979), p. 64, 141, 144–145.**

**Ullmanns Encyclopädie der techn. Chemie, 4. Aufl., Bd. 7, Weinheim (1974), p. 601**

(73) Patentinhaber: **CIBA-GEIGY AG, Patentabteilung Postfach, CH-4002 Basel (CH)**

(72) Erfinder: **Adam, Jean-Marie, Dr., 3, Rue de Montreux, F-68300 Saint-Louis (FR)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 012 111 B1

ACTORUM AG

# Wasserlösliche Farbstoffe der 1-Amino-2-phenoxy-4-phenyl-amino-anthrachinonreihe und Verfahren zu deren Herstellung und deren Verwendung

Die Erfindung betrifft neue wasserlösliche Anthrachinonfarbstoffe, Verfahren zur Herstellung dieser Farbstoffe, die Verwendung der Farbstoffe zum Färben oder Bedrucken von Textilmaterialien, vor allem von natürlichen und synthetischen Polyamidmaterialien, sowie das mit diesen neuen Anthrachinonfarbstoffen gefärbte und bedruckte Textilmaterial.

Violette, auf natürliches und synthetisches Polyamidmaterial gut ziehende Farbstoffe sind gesucht. Aus der DE-PS 821 384 sind zwar violette Walkfarbstoffe der Anthrachinonreihe bekannt, jedoch besitzen diese Farbstoffe auf Polyamidmaterialien ein schlechtes Ziehvermögen.

Es wurden nun neue, violette wasserlösliche Anthrachinonfarbstoffe gefunden, welche sich durch ein gutes Ziehvermögen und sehr gute Nassechtheiten auszeichnen.

Die Erfindung betrifft somit neue wasserlösliche Anthrachinonfarbstoffe und deren Mischungen untereinander, die in Form der Säure der Formel I

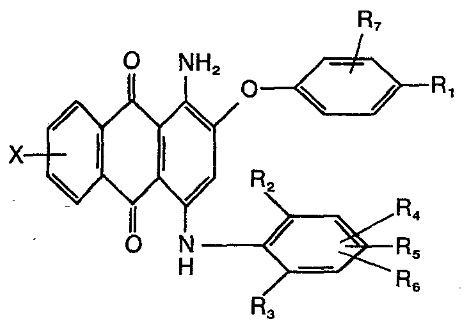

(I)

entsprechen, worin bedeuten:

X Halogen, $R_1$ einen unverzweigten oder verzweigten Alkylrest mit 4 bis 8 Kohlenstoffatomen, $R_2$ und $R_3$ unabhängig voneinander einen unverzweigten oder verzweigten Alkylrest mit 1 bis 4 Kohlenstoffatomen, $R_4$ Wasserstoff, einen unverzweigten oder verzweigten Alkylrest mit 1 bis 4 Kohlenstoffatomen, eine gegebenenfalls acylierte Aminogruppe oder die Gruppe –NHZ, wobei Z einen faserreaktiven Rest bedeutet, $R_5$ Wasserstoff oder einen unverzweigten oder verzweigten Alkylrest mit 1 bis 4 Kohlenstoffatomen, $R_6$ und $R_7$ unabhängig voneinander, Wasserstoff, eine $-SO_3H$-Gruppe, Halogen oder einen Rest der Formel $-CH_2-NH-CO-Y$, wobei Y einen gegebenenfalls durch ein oder zwei Halogenatome substituierten Alkyl- oder Alkenylrest mit 1 bis 4 Kohlenstoffatomen oder einen gegebenenfalls durch Halogen oder einen Alkylrest mit 1 bis 4 Kohlenstoffatomen substituierten Phenylrest darstellt, mit der Bedingung, dass mindestens einer der Reste $R_6$ oder $R_7$ die $-SO_3H$-Gruppe bedeutet.

Entsprechende Antrachinonfarbstoffe, die alle jedoch im Phenylring in 5- bis 8-Stellung des Anthrachinonkerns unsubstituiert sind, sind bereits aus der US-Patentschrift 3 491 125, der französischen Patentschrift 1 593 857 und der britischen Patentschrift 678 983 bekannt.

Bei der nachträglichen Halogenierung dieser Farbstoffe, wie dies z.B. in der französischen Patentschrift 1 593 857 offenbart ist, wird das Halogenatom stets in die externe Phenylamino- und/oder Phenoxygruppe eingeführt, keinesfalls aber in den Anthrachinonkern selbst.

Werden hingegen in einem oder beiden Phenylringen des Anthrachinonkerns halogenierte Anthrachinonverbindungen einer Phenolschmelze unterworfen, dann werden unter den zur Einführung einer Phenoxygruppe erforderlichen Reaktionsbedingungen, wie sie z.B. in der deutschen Patentschrift 263 423 beschrieben sind, stets alle Halogenatome durch Phenoxygruppen ersetzt. Dementsprechend werden gemäss der deutschen Patentschrift 158 531 auf den Seiten 3 und 4 und Ullmanns Encyklopädie der technischen Chemie, 4. Auflage Band 7, Weinheim (1974), auf Seite 601 bei Dihalogenanthrachinonverbindungen stets die entsprechenden Di-Phenoxyanthrachinonverbindungen erhalten. Gemäss Houben/Weyl, Band VII/3c, Stuttgart (1979), Seite 144 ist es für diese Umsetzung unwesentlich von Chlor oder Bromanthrachinonverbindungen auszugehen.

Keiner dieser Publikationen konnte entnommen werden, dass bei im Anthrachinonkern mehrfach halogenierten Verbindungen eine selektive Umsetzung mit Phenolaten überhaupt möglich sei.

Demzufolge schienen die Anthrachinonfarbstoffe der angegebenen Formel auch nicht herstellbar zu sein. Überraschenderweise wurde nun gefunden, dass bei der Phenolschmelze, die zur Einführung der 2ständigen Phenoxygruppe erforderlich und zur Herstellung von erfindungsgemässen Anthrachinonfarbstoffen unumgänglich ist, selektiv lediglich das Halogenatom bzw. die Sulfonsäuregruppe in 2-Stellung des Anthrachinonkerns reagiert, während das Halogenatom in 5- bis 8-Stellung nicht umgesetzt wird. Erst die Überwindung dieses Vorurteils ermöglichte somit die Herstellung der erfindungsgemässen Anthrachinonfarbstoffe.

X in Formel (I) stellt ein Halogenatom, z.B. ein Fluor- oder Bromatom, vorzugsweise ein Chloratom dar, das sich in 6- oder 7-Stellung des 1,4-Diaminoanthrachinons befindet.

$R_1$ in der Bedeutung eines unverzweigten oder verzweigten Alkylrestes mit 4 bis 8 Kohlenstoffatomen stellt beispielsweise folgende Reste dar: den n-, sec.- oder tert.-Butylrest; n-, sec.- oder tert.-Pentyl-, Hexyl- oder Octylrest; in bevorzugten Anthrachinonverbindungen bedeutet $R_1$ einen verzweigten Alkylrest mit 4 bis 8 Kohlenstoffatomen, insbesondere den tert.-Butylrest.

$R_2$, $R_3$, $R_4$ und $R_5$ in der Bedeutung eines unverzweigten oder verzweigten Alkylrestes mit 1 bis 4 Kohlenstoffatomen stellen z.B. den Methyl-, Äthyl-, n- und iso-Propyl- und n-125 sec.- und tert.-Butylrest dar. In bevorzugten Anthrachinonverbindungen bedeuten $R_2$ und $R_3$ je den Methylrest und $R_5$ einen unverzweigten Alkylrest mit 1 bis 2 Kohlenstoffatomen.

Bedeutet $R_4$ eine Aminogruppe, so kann diese am N-Atom monosubstituiert sein; beispielsweise handelt es sich um einen Alkylaminorest, wie den Methylamino- oder Äthylaminorest.

Handelt es sich bei $R_4$ um eine acylierte Aminogruppe, so entsprechen diese Reste $R_4$ vor allem der Formel $-NHCO-Q$ oder $-NHSO_2-Q$, worin Q für einen Alkylrest, vor allem Methylrest, oder für einen Arylrest, insbesondere den Phenylrest, steht.

Unter einem faserreaktiven Rest Z wird ein solcher verstanden, der eine oder mehrere reaktive Gruppen oder abspaltbare Substituenten aufweist, welche beim Aufbringen der Farbstoffe auf z.B. Superpolyamidfasern oder Wolle mit den NH-Gruppen dieser Fasern unter Ausbildung kovalenter Bindungen zu reagieren vermag. Derartige faserreaktive Gruppierungen sind aus der Literatur in grosser Zahl bekannt.

Als geeignete Faserreaktivgruppen Z sind z.B. solche der aliphatischen Reihe zu nennen, wie die Acryloyl-, Vinylsulfonyl-„ β-Sulfatoäthylaminosulfonyl- Mono-, Di- oder Trichlor- bzw. Mono-, Di- oder Tribromacryloyl-, wie $-CO-CH=CH-Cl$, $-CO-CCl=CH_2$, $-CO-CH=CHBr$, $-CO-CBr=CH_2$, $-CO-CBr=CHBr$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonylpropionyl-, β-Chloräthylsulfonyl-, β-Sulfatoäthylsulfonyl-, β-Methylsulfonyl-äthylsulfonyl-, β-Phenylsulfonyläthylsulfonyl-, 2-Fluor-2-chlor-3,3-difluorcyclobutan-1-carbonyl-, 2,2,3,3-Tetrafluorcyclobutan-carbonyl-1- oder -sulfonyl-1-, β-(2,2,3,3-Tetrafluorcyclobutyl-1)-acryloyl-, α- oder β-Alkyl- oder -Arylsulfonyl-acryloyl-Gruppe, wie α oder β-Methylsulfonylacryloyl.

Besonders für Polyamid, vor allem für Wolle geeignete Reaktivreste sind: Chloracetyl-, Bromacetyl-, α, β-Dichlor- oder α, β-Dibrompropionyl-, α-Chlor- oder α-Bromacryloyl-2,4,6-Trifluoropyrimidyl-5-, 2,4,6-Trifluorotriazinyl- sowie Fluortriazinylreste der Formel

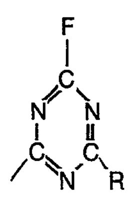

worin R eine gegebenenfalls substituierte Aminogruppe oder eine gegebenenfalls verätherte Oxy- oder Thiogruppe bedeutet, wie z.B. die $NH_2$-Gruppe, eine mit $C_1$–$C_4$-Alkylresten mono- oder disubstituierte Aminogruppe, eine $C_1$–$C_4$-Alkoxygruppe, eine $C_1$–$C_4$-Alkylmercaptogruppe, Arylamino, insbesondere Phenylamino, oder mit Methyl, Methoxy, Chlor und vor allem Sulfo substituiertes Phenylamino, Phenoxy, Mono- oder Disulfophenyloxy und ferner Dichlortriazinylaminoreste und deren sulfogruppenhaltige Abkömmlinge wie z.B.

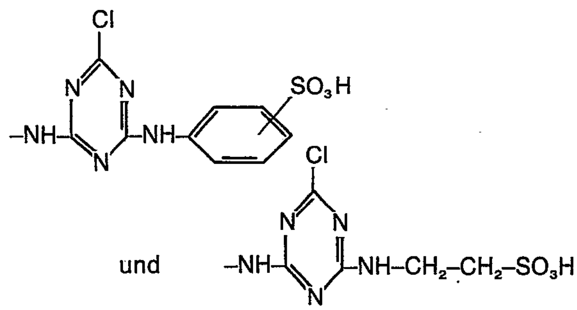

und

Beispiele solcher Triazinverbindungen sind: 2,4-Difluor-6-aminotriazin, 2,4-Difluor-6-methylaminotriazin, 2,4-Difluor-6-äthylaminotriazin, 2,4-Difluor-6-phenylaminotriazin, 2,4-Difluor-6-(2'-,3'- oder 4'-sulfophenyl)-aminotriazin, 2,4-Difluor-6-(2',4'- oder 3',4'- oder 2',5'- oder 4',5'-disulfophenyl)-aminotriazin, 2,4-Difluor-6-dimethylaminotriazin, 2,4-Difluor-6-methoxytriazin, 2,4-Difluor-6-(β-methoxyäthoxy)-triazin, 2,4-Difluor-6-methylmercaptotriazin, 2,4-Difluor-6-phenylmercapto-triazin.

Besonders bevorzugte Reaktivreste Z sind vor allem die α-Bromacryloyl- und die α,β-Dibrompropionylgruppe, Erstere kann entweder mit Hilfe von Bromacrylsäurechlorid eingeführt oder aus der α, β-Dibrompropionylgruppe durch Abspaltung von Bromwasserstoff erhalten werden. Analoges gilt auch für die α-Chloracryloylgruppe. Ebenfalls von Interesse sind die 4,6-Difluortriazinyl-(2)- oder die 4-Fluor-6-alkyl- oder -arylaminotriazinyl-(2)-Gruppen.

In bevorzugten Anthrachinonfarbstoffen der Formel I bedeutet $R_4$ Wasserstoff.

Als Halogen können $R_6$ und $R_7$ Fluor, Brom oder vor allem Chlor darstellen. Bedeuten $R_6$ oder $R_7$ einen Rest der Formel $-CH_2-NH-CO-Y$, so stellt Y einen der obengenannten Alkylreste mit 1 bis 4 Kohlenstoffatomen oder einen Alkenylreste, vorzugsweise $-CH=CH_2$ dar oder einen Phenylrest, der durch die genannten Halogene oder einen Alkylrest mit 1 bis 4 Kohlenstoffatomen substituiert sein kann.

Mindestens einer der Reste $R_6$ und $R_7$ stellt eine $SO_3H$-Gruppe dar. Vorzugsweise bedeutet der eine dieser Reste eine $SO_3H$-Gruppe und der andere Wasserstoff.

Besonders interessante Anthrachinonfarbstoffe sind diejenigen der Formel I, worin $R_1$ den tert.-Butylrest, $R_2$, $R_3$ und $R_5$ je eine Methylgruppe, wobei $R_5$ in p-Stellung zur Aminogruppe steht, X ein Chloratom und von den Gruppen $R_6$ und $R_7$ die eine Wasserstoff und die andere einen $SO_3H$-Rest bedeutet.

Insbesondere handelt es sich um Anthrachinonfarbstoffe der folgenden Formeln

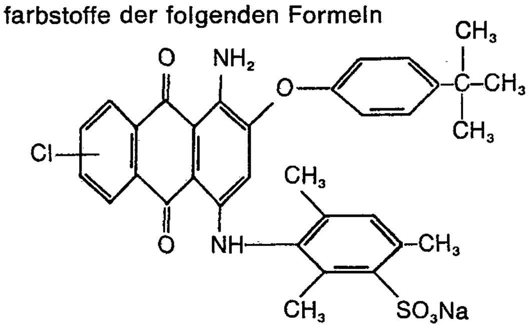

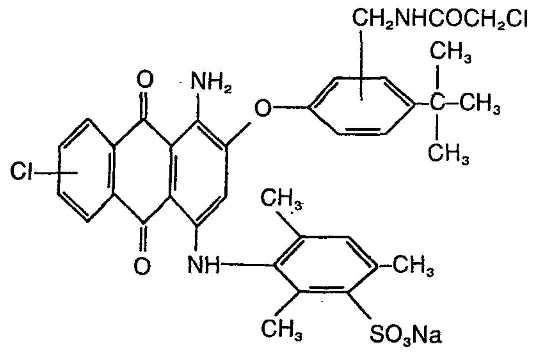

Die neuen wasserlöslichen Anthrachinonfarbstoffe der Formel I sind violette Farbstoffe, die vor allem durch ein gutes Ziehvermögen und Aufbauvermögen auf Polyamidmaterialien und reine Nuancen sowie durch gute Nassechtheiten, wie Heisswasserechtheit, Schweissechtheit und Waschechtheit, gekennzeichnet sind.

Zur Herstellung der erfindungsgemässen neuen Anthrachinonfarbstoffe stehen verschiedene Wege zur Verfügung.

Die Verbindungen, die in Form der freien Säure der Formel II

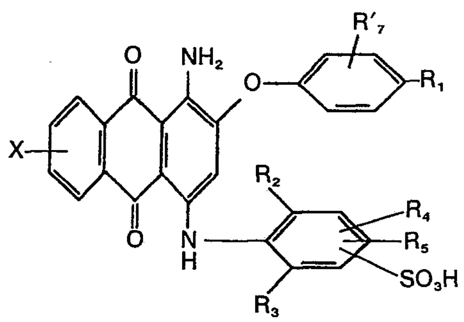
(II)

entsprechen, worin X, $R_1$, $R_2$, $R_3$, $R_4$ und $R_5$ die oben angegebene Bedeutung aufweisen und $R'_7$ Wasserstoff, Halogen oder einen Rest der Formel $-CH_2-NH-CO-Y$ bedeutet, wobei Y einen gegebenenfalls durch ein oder zwei Halogenatome substituierten Alkylrest oder Alkenylrest mit 1 bis 4 Kohlenstoffatomen oder einen gegebenenfalls durch Halogen oder einen Alkylrest mit 1 bis 4 Kohlenstoffatomen substituierten Phenylrest darstellt, erhält man dadurch, dass man eine Anthrachinonverbindung der Formel V

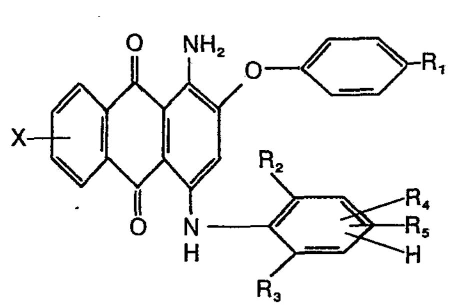
(V)

worin X, $R_1$, $R_2$, $R_3$, $R_4$ und $R_5$ die oben angegebene Bedeutung aufweisen, mit Oleum, welches 4 bis 65 Gewichtsprozent, vor allem 20 bis 30 Gewichtsprozent und insbesondere 25 Gewichtsprozent freies Schwefeltrioxid enthält, bei einer Temperatur von 0 bis 5 °C, insbesondere 0 bis 2 °C, zur Reaktion bringt, wobei die Konzentration an freiem $SO_3$ im Reaktionsgemisch 4–6% beträgt, oder mit einer äquivalenten Menge Chlorsulfonsäure in einem halogenierten Kohlenwasserstoff bei einer Temperatur von 50 bis 80 °C zur Reaktion gebracht wird und falls $R_4$ in Formel V eine acylierbare Aminogruppe ist, gegebenenfalls anschliessend mit einer den Acylrest oder den faserreaktiven Rest Z einführenden Verbindung umsetzt, und gegebenenfalls anschliessend das Produkt mit einem halogenabgebenden Mittel umsetzt, oder mit einem N-Methylolamid, das am N-Atom die Gruppe –COY trägt, in saurem Medium umsetzt, wobei Y die oben angegebene Bedeutung hat.

Geeignete halogenierte Kohlenwasserstoffe sind aromatische Kohlenwasserstoffe, wie Monochlorbenzol oder Dichlorbenzol sowie vor allem aliphatische Kohlenwasserstoffe, wie Trichloräthylen und insbesondere Tetrachlorkohlenstoff.

Eine andere Möglichkeit der Herstellung der Anthrachinonfarbstoffe der Formel II besteht darin, dass man eine Anthrachinonverbindung der Formel VI

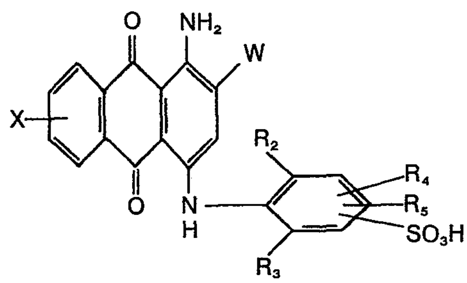
(VI)

worin X, $R_2$, $R_3$, $R_4$ und $R_5$ die oben angegebene Bedeutung haben und W Halogen oder eine $-SO_3H$-Gruppe darstellt, mit einem p-Alkylphenol der Formel VII

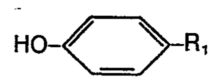
(VII)

worin $R_1$ die oben angegebene Bedeutung hat, in Gegenwart von säurebindenden Mitteln bei erhöhter Temperatur umsetzt, und falls $R_4$ in Formel VI eine acylierbare Aminogruppe ist, gegebenenfalls anschliessend mit einer den Acylrest oder den faserreaktiven Rest Z einführenden Verbindung umsetzt.

Die Umsetzung der Anthrachinonverbindung der Formel VI mit dem p-Alkylphenol der Formel VII erfolgt dabei vorzugsweise bei einer Temperatur von 180 bis 240 °C, insbesondere bei 220 °C, wobei diese Umsetzung vorzugsweise mit einer Schmelze des Phenols der Formel VII durchgeführt wird.

Als säurebindende Mittel kommen z. B. die Hydroxyde der Alkalimetalle, vorzugsweise von Kalium und Natrium, wie Kaliumhydroxyd oder Natriumhydroxyd in Frage.

Die neuen wasserlöslichen Anthrachinonfarbstoffe, die in Form der freien Säure der Formel III

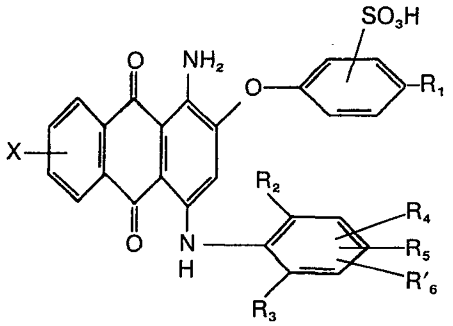

(III)

entsprechen, worin bedeuten:

X Halogen, $R_1$ einen unverzweigten oder verzweigten Alkylrest mit 4 bis 8 Kohlenstoffatomen, $R_2$ und $R_3$ unabhängig voneinander einen unverzweigten oder verzweigten Alkylrest mit 1 bis 4 Kohlenstoffatomen, $R_4$ Wasserstoff, einen unverzweigten oder verzweigten Alkylrest mit 1 bis 4 Kohlenstoffatomen, eine gegebenenfalls acylierte Aminogruppe oder die Gruppe –NHZ, wobei Z einen faserreaktiven Rest bedeutet, $R_5$ Wasserstoff oder einen unverzweigten oder verzweigten Alkylrest mit 1 bis 4 Kohlenstoffatomen, $R'_6$ Wasserstoff, Halogen oder einen Rest der Formel $-CH_2-NH-CO-Y$, wobei Y einen gegebenenfalls durch ein oder zwei Halogenatome substituierten Alkyl- oder Alkenylrest mit 1 bis 4 Kohlenstoffatomen oder einen gegebenenfalls durch Halogen oder einen Alkylrest mit 1 bis 4 Kohlenstoffatomen substituierten Phenylrest darstellt, werden erhalten, indem man eine Anthrachinonverbindung der Formel IV

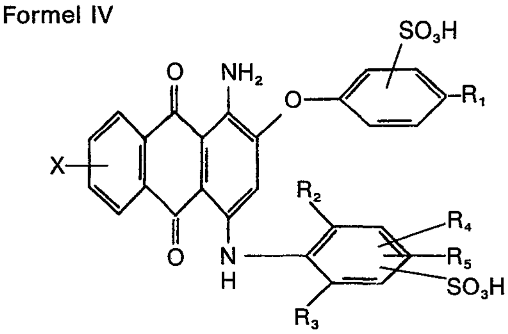

(IV)

worin X, $R_1$, $R_2$, $R_3$, $R_4$ und $R_5$ die oben angegebene Bedeutung haben, selektiv im Anilinring desulfoniert und gegebenenfalls anschliessend das Produkt mit einem halogenabgebenden Mittel umsetzt, oder mit einem N-Methylolamid, das am N-Atom die Gruppe –COY trägt, in saurem Medium umsetzt, wobei Y die oben angegebene Bedeutung hat.

Die selektive Desulfonierung erfolgt z. B. mit 60- bis 90%iger, vorzugsweise 80%iger wässriger Schwefelsäure bei einer Temperatur von 80 bis 120 °C, insbesondere 110 °C, oder mittels Sulfolan (= Tetramethylensulfon) bei einer Temperatur von 180 bis 220 °C, insbesondere 210 °C, in beiden Fällen während ca. 30 bis 70 Minuten.

Die Verbindungen der Formel IV, die ebenfalls neue wasserlösliche Anthrachinonfarbstoffe darstellen, werden erhalten, indem man eine Anthrachinonverbindung der obengenannten Formel V sulfoniert, so dass zwei Sulfonsäuregruppen eingeführt werden. Vorzugsweise erfolgt die Sulfonierung bei einer Temperatur von 10 bis 40 °C, insbesondere etwa 20 °C, mit Oleum, enthaltend 1 bis 20, vorzugsweise 5 bis 10% freies Schwefeltrioxid.

Für den Fall, dass der Rest $R_4$ in den Anthrachinonfarbstoffen der Formeln II, III oder IV eine acylierte Aminogruppe oder einen faserreaktiven Rest –NHZ darstellt, ist es vorteilhaft, Ausgangsverbindungen der Formel VI bzw. V zu verwenden, in welchen $R_4$ eine acylierbare Aminogruppe darstellt, und diese mit dem Phenol der Formel VII umzusetzen bzw. zu sulfonieren. Die erhaltenen Umsetzungsprodukte können dann nachträglich mit einer den Acylrest oder den faserreaktiven Rest Z einführenden Verbindung zu einem acylierten bzw. faserreaktiven Farbstoff umgesetzt werden. Hierfür geeignete Acylverbindungen sind z. B. solche, die den genannten Reaktivgruppen zugrunde liegen, im allgemeinen Halogenide, vor allem Chloride der genannten Komponenten, wobei die Kondensation im allgemeinen in wässerigem oder organischem Medium und in alkalischem bis saurem Bereich durchgeführt wird.

Die Zwischenprodukte der Formel V werden wie oben erläutert sowohl zur Herstellung der erfindungsgemässen Anthrachinonfarbstoffe der Formel II als auch derjenigen der Formel IV verwandt. Diese Zwischenprodukte der Formel V sind neu und werden z. B. erhalten, indem man eine Verbindung der Formel

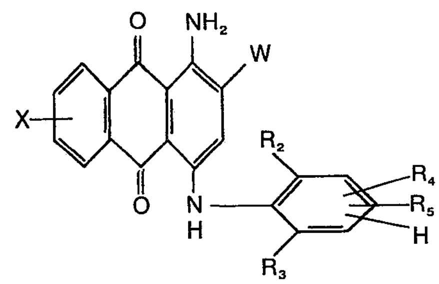

(VIII)

worin X, $R_2$, $R_3$, $R_4$ und $R_5$ die oben angegebene Bedeutung haben und W Halogen oder eine $SO_3H$-Gruppe darstellt, mit einem p-Alkylphenol der Formel VII

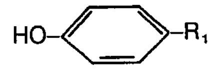

worin $R_1$ die oben angegebene Bedeutung hat, umsetzt. Die Umsetzung erfolgt unter den für die Darstellung der Verbindungen der Formel VI angegebenen Bedingungen.

Die Verbindungen der Formel VIII, bei denen X, $R_2$, $R_3$, $R_4$ und $R_5$ die oben angegebene Bedeutung hat und W eine $SO_3H$-Gruppe darstellt, sind im Schweizer Patentgesuch Nr. 6075/78–0 beschrieben. Diejenigen der Formel IX

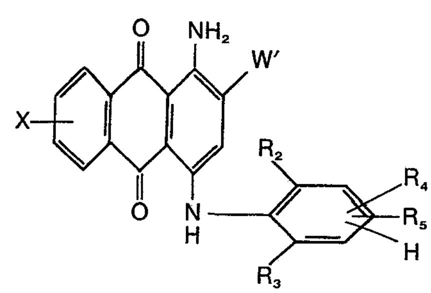

(IX)

worin X, $R_2$, $R_3$, $R_4$ und $R_5$ die oben angegebene Bedeutung aufweisen und W' Halogen darstellt, sind neu. Die Verbindungen der Formel VIII oder IX werden erhalten, indem man eine Anthrachinonverbindung der Formel X

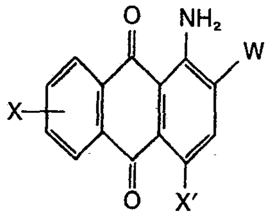

(X)

worin X und W die oben angegebene Bedeutung aufweisen und X' Halogen oder eine $SO_3H$-Gruppe darstellt, mit einem Phenylamin der Formel XI

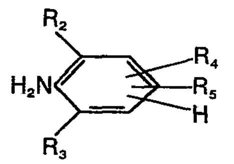

(XI)

worin $R_2$, $R_3$, $R_4$ und $R_5$ die oben angegebene Bedeutung haben, umsetzt.

Die Zwischenprodukte der Formel

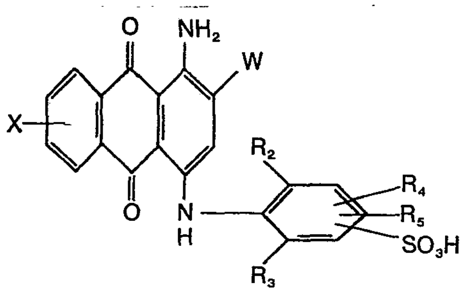

(VI)

worin X, $R_2$, $R_3$, $R_4$ und $R_5$ die oben angegebene Bedeutung haben und W Halogen oder eine $SO_3H$-Gruppe darstellt, sind neu und sind auch schon selbst als violette Farbstoffe zum Färben von natürlichen und synthetischen Polyamidmaterialien geeignet.

Sie werden nach an sich bekannten Verfahren erhalten, z.B. indem man eine Anthrachinonverbindung der oben aufgeführten Formel X mit einem Phenylamin der Formel XII

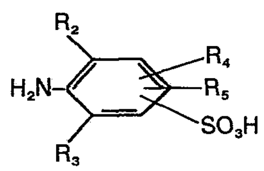

(XII)

worin $R_2$, $R_3$, $R_4$ und $R_5$ die oben angegebene Bedeutung haben, umsetzt.

Die Anthrachinonverbindungen der Formel X und die Phenylamine der Formeln XI und XII sind bekannt.

Als Anthrachinonverbindungen der Formel X kommen z.B. in Frage: 1-Amino-4-brom-6-chlor-anthrachinon-2-sulfonsäure, 1-Amino-4-brom-7-chlor-anthrachinon-2-sulfonsäure und ein Gemisch (1:1) dieser beiden Verbindungen bzw. die entsprechenden Verbindungen, welche in 2-Stellung anstelle der Sulfonsäuregruppe Halogen tragen.

Als Phenylamine der Formeln XI oder XII kommen z.B. in Betracht: 2,4,6-Trimethylanilin, 2-Methyl-6-äthylanilin, 2,6-Dimethyl-anilin bzw. die Monosulfosäuren dieser drei Verbidungen und 5-Amino-2, 4,6-Trimethyl-anilin-3-sulfonsäure.

Die Anthrachinonverbindungen der Formel X können nach verschiedenen Methoden hergestellt werden. Man erhält sie z.B. durch Aminierung von 1,6- und/oder 1,7-Dihalogenanthrachinon gemäss der Arbeitsweise der DE-PS 2 604 830, anschliessende Sulfierung in 2-Stellung z.B. mit Chlorsulfonsäure und Halogenierung, vor allem Bromierung in 4-Stellung. Eine andere Möglichkeit der Darstellung besteht darin, dass man eine in 6- und/oder 7-Stellung mono-sulfonierte Anthrachinonverbindung in 1-Stellung nitriert, dann die Sulfogruppe in 6- und/oder 7-Stellung durch Halogen, vor allem Chlor austauscht, die 1ständige Nitrogruppe zur Aminogruppe reduziert und diese 1-Amino-6/7-Halogen-anthrachinonverbindung wie angegeben in 2-Stellung sulfiert und anschliessend in 4-Stellung zur Anthrachinonverbindung der Formel X halogeniert.

Die Einführung einer Gruppe der Formel $-CH_2-NH-CO-Y$, wobei Y die oben angegebene Bedeutung hat, erfolgt nach Tscherniak-Einhorn, indem man die Anthrachinonverbindung mit einem N-Methylolamid, das am N-Atom die Gruppe $-COY$ trägt, in saurem Medium, bevorzugt konzentrierter Schwefelsäure, umsetzt. Geeignete N-Methylolamide sind z.B. N-Methylolbenzamid, N-Methylol-2,4-dichlorbenzamid, N-Methylol-2-chlorbenzamid und N-Methylol-4-chlorbenzamid.

Verwendung finden die neuen wasserlöslichen Anthrachinonfarbstoffe vor allem zum Färben oder Bedrucken von natürlichen und snythetischen Polyamidmaterialien, wie Wolle und Nylon.

Handelt es sich um faserreaktive Anthrachinonfarbstoffe, so können diese zum Färben oder Bedrucken von Cellulosematerialien oder natürlichen und synthetischen Polyamidmaterialien und zum Färben von Mischgeweben, z.B. aus Wolle/Cellulose, verwendet werden.

Ein Vorteil der Erfindung liegt darin, dass als Ausgangsverbindungen zur Herstellung der erfindungsgemässen Anthrachinonverbindungen bislang wertlose Abfallprodukte (z.B. Sumpfprodukte von Anthrachinonnitrierungen) verwendet werden können.

Die folgenden Beispiele erläutern die Erfindung, ohne sie darauf zu limitieren. Teile bedeuten Gewichtsteile und die Temperaturen sind in Grad Celsius angegeben. Die Bezeichnung 6/7-Chloranthrachinon bedeutet, dass es sich um ein Gemisch einer 6-Chlor-anthrachinon- und einer 7-Chlor-anthrachinonverbindung handelt. Die Anthrachinonverbindungen können in der freien Säureform oder als Alkalisalz wie z.B. als Ammonium-, Natrium-, Kalium- oder Lithiumsalz vorliegen.

Beispiel 1

43,9 Teile Natriumsalz des Gemisches aus 1-Amino-4-brom-6-chlor-anthrachinon-2-sulfonsäure und 1-Amino-4-brom-7-chlor-anthrachinon-2-sulfonsäure werden zusammen mit 20 Teilen 2,4,6-Trimethylanilin (Mesidin) und 20 Teilen Natriumbicarbonat in 250 Teilen Wasser und 80 Teilen Methylalkohol angeschlämmt. Man erwärmt dieses Gemisch auf 75° und streut unter gutem Rühren 0,6 Teile Kupferpulver ein. Zur Vervollständigung der Reaktion rührt man 15 Stunden bei 80–85°. Mit Wasserdampf wird das überschüssige Mesidin abdestilliert. Den Rückstand versetzt man mit 300 Teilen Methylalkohol und trennt die heisse alkoholisch-wässrige Farbstofflösung durch Filtration vom Kupferkatalysator. Das Filtrat wird mit verdünnter Salzsäure angesäuert, wobei das Kondensationsprodukt der Formel

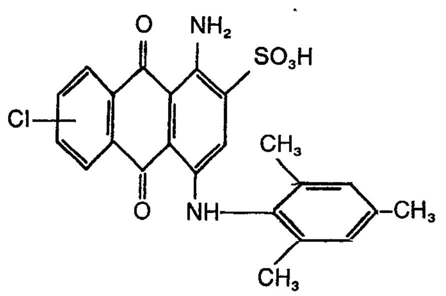

ausfällt. Dieses wird abgesaugt und mit verdünnter Salzsäure nachgewaschen. Das Nutschgut wird in 300 Teilen Wasser angeschlämmt, mit verdünnter wässriger Natriumhydroxidlösung auf pH 7,5 gestellt, auf 60° erwärmt und mit 300 Teilen einer wässerigen 20%igen Natriumchloridlösung versetzt.

Anschliessend wird abgesaugt und getrocknet.

Man löst 47,1 Teile dieses Kondensationsproduktes in 300 Teilen 10%igem Oleum und rührt so lange bei 30–40°, bis die Dünnschichtchromatographie kein Ausgangsmaterial mehr zeigt. Man giesst das Sulfonierungsgemisch in eine Eis-Salzwasser-Mischung und saugt das ausgeschiedene Sulfonierungsprodukt ab, wäscht mit Salzwasser neutral und trocknet. Die so erhaltene Disulfonsäure wird nun in eine geschmolzene Mischung von 200 Teilen p-tertiär-Butylphenol und 60 Teilen einer 50%igen Kalilauge eingetragen. Unter Abdestillieren des Wassers wird die Temperatur auf 220° erhöht. Man rührt die Schmelze 4 Stunden lang bei dieser Temperatur. Bei 120° verdünnt man mit 1000 Teilen einer 10%igen Natronlauge, saugt den Farbstoff ab und wäscht mit warmem Wasser. Der rohe Farbstoff wird in Wasser angeschlämmt, mit Salzsäure kongosauer gestellt und das noch anhaftende p-tertiär-Butylphenol durch Wasserdampfdestillation entfernt. Die Anschlämmung wird mit Natronlauge auf pH 7 gestellt, auf 80° erwärmt und mit 5% Natriumchlorid versetzt. Der ausgeschiedene Farbstoff der Formel:

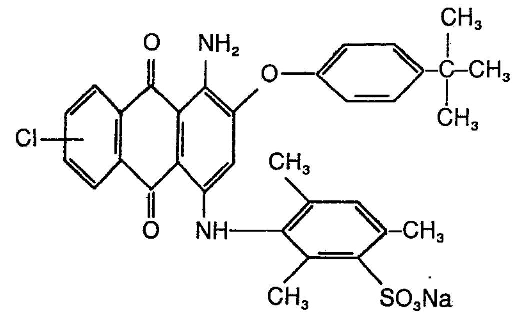

wird abgesaugt und getrocknet. Der Farbstoff zeigt einen ausgezeichneten Aufbau auf synthetischen Polyamidfasern, die er in reinen, lichtechten und nassechten blaustichig violetten Farbtönen anfärbt.

Ähnliche violette Farbstoffe werden auch erhalten, wenn man die 47,1 Teile des Kondensationsproduktes aus 1-Amino-4-brom-6/7-chlor-anthrachinon-2-sulfonsäure mit 2,4,6-Trimethylanilin durch 45,7 Teile des Kondensationsproduktes aus 1-Amino-4-brom-6/7-chlor-anthrachinon-2-sulfonsäure mit 3,6-Dimethylanilin(vic.Xylidin) oder durch 47,1 Teile des Kondensationsproduktes aus 1-Amino-4-brom-6/7-chlor-anthrachinon-2-sulfonsäure mit 2-Methyl-6-äthylanilin ersetzt.

Beispiel 2

Man löst 47,1 Teile 1-Amino-2-brom-4-mesidino-6/7-chlor-anthrachinon, erhalten durch Kondensation von 1-Amino-2,4-dibrom-6/7-chloranthrachinon mit Mesidin, in 300 Teilen Schwefelsäure-Monohydrat bei 25° und tropft 75 Teile 66%iges Oleum hinzu, wobei die Temperatur nicht über 40° steigen soll. Man rührt bei 30–40°, bis eine Probe in Sodalösung vollständig löslich ist. Man giesst in Eis-Wasser, versetzt mit 10 g Kochsalz pro 100 ml der Anschlämmung und filtriert ab. Den Niederschlag wäscht man mit einer 10%igen Salzlösung bis neutral und trocknet. Die so erhaltene 1-Amino-2-brom-4-mesidino-6/7-chlor-anthrachinon-3′-sulfonsäure wird in eine geschmolzene Mischung von 200 Teilen p-tertiär-Butylphenol und 60 Teilen einer 50%igen Kalilauge eingetragen. Unter Abdestillieren des Wassers wird die Temperatur auf 200° erhöht. Man lässt die Kondensation 15 Stunden lang bei 200° laufen. Nach beendeter Umsetzung wird der Farbstoff der Formel

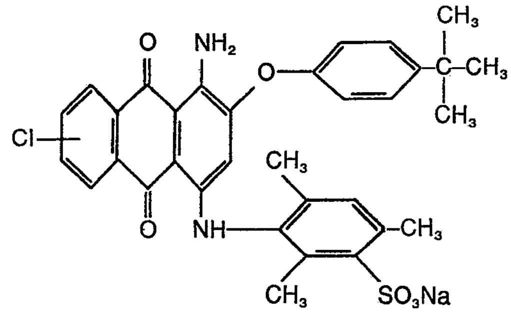

wie in Beispiel 1 durch Fällen mit einer 10%igen Natronlauge abgeschieden und aufgearbeitet. Der Farbstoff wird als violettes Pulver erhalten, das

sich in Wasser mit violetter Farbe löst; er zeigt auf Polyamidfasern die gleichen färberischen Eigenschaften wie der Farbstoff des Beispiels 1.

Beispiel 3

Man trägt 80 Teile einer 50%igen Kalilauge in 200 Teile geschmolzenes p-tert.-Butylphenol ein und treibt die Temperatur der Schmelze unter Abdestillieren des Wassers auf 180°. Nun fügt man 54,4 Teile des Kondensationsproduktes aus 1-Amino-4-brom-6/7-chlor-anthrachinon-2-sulfonsäure und 2,6-Diaminomesitylen-4-sulfonsäure (erhalten gemäss der im Beispiel 1 beschriebenen Arbeitsweise) hinzu und rührt bei 220° 4 Stunden weiter. Man lässt die Temperatur auf 100° sinken, verdünnt mit 1000 Teilen Wasser und filtriert die ausgeschiedene Farbstoffbase ab. Das noch vorhandene p-tert.-Butylphenol wird – wie im Beispiel 1 – mit Wasserdampf abdestilliert.

6 Teile dieser Base werden in 60 Teilen Wasser bei pH 7 gelöst. Nun tropft man in 10 Minuten bei 15–20° 1 Teil Acetylchlorid zu, wobei der pH-Wert des Reaktionsgemisches durch Zugabe einer 5%igen Natronlauge auf 6,5–7,5 gehalten wird. Man rührt noch 3 Stunden bei 15–20° aus. Durch Zugabe von 10 g Kochsalz pro 100 ml Lösung wird der acylierte Farbstoff der Formel:

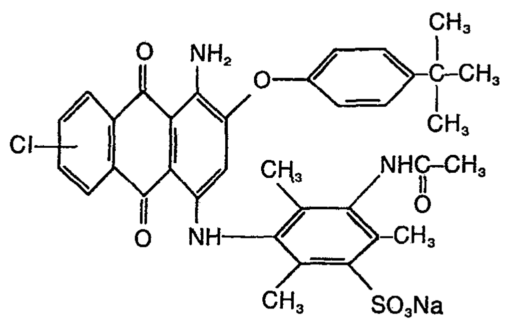

ausgefällt. Man erhält ein wasserlösliches, blaustichigviolettes Pulver, das auf Polyamid ein sehr gutes Ausziehvermögen zeigt.

Ersetzt man im obigen Beispiel die 200 Teile p-tert.-Butylphenol durch 200 Teile p-tert.-Amylphenol oder durch 200 Teile Isooctylphenol, so erhält man ähnliche Farbstoffe mit gleich guten färberischen Eigenschaften.

Beispiel 4

6 Teile des Farbstoffs gemäss Beispiel 1 werden mit 1,5 Teilen N-Methylolchloracetamid in 25 Teilen 95%iger Schwefelsäure bei 0–5° portionenweise gelöst. Man rührt nocht 15 Stunden bei 0–5°, giesst das Reaktionsgemisch in Eis-Wasser und saugt den ausgeschiedenen Farbstoff ab. Das Nutschgut wird in Waser angeschlämmt und mit Natronlauge auf pH 7 gestellt. Durch Zugabe von 5 g Kochsalz pro 100 ml Lösung wird das Natriumsalz des Farbstoffs der Formel

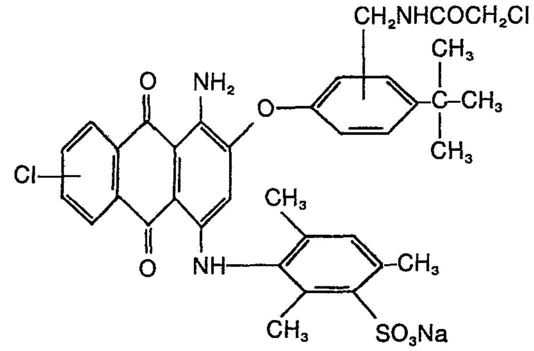

ausgefällt. Dieser färbt Polyamidfasern in violetten Tönen mit einem sehr guten Ausziehvermögen und guten Nassechtheiten.

Beispiel 5

54 Teile der Anthrachinonbase der Formel

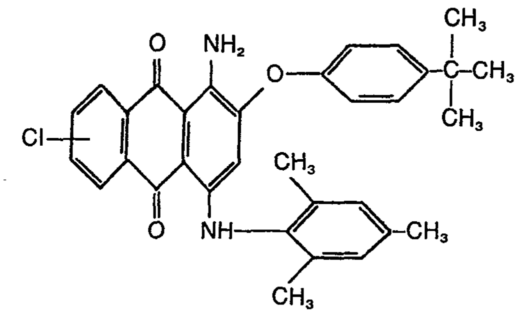

erhalten durch Phenolschmelze aus 1-Amino-4-mesidino-6/7-chlor-anthrachinon-2-sulfonsäure mit p.-tert.-Butylphenol, werden in 500 Teilen Schwefelsäuremonohydrat bei 0–5° gelöst. Man lässt 95 Teile 25%iges Oleum bei 0–5° zulaufen und giesst das Sulfonierungsgemisch in eine Eis/Wasser-Mischung. Die ausgeschiedene Monosulfonsäure der Formel

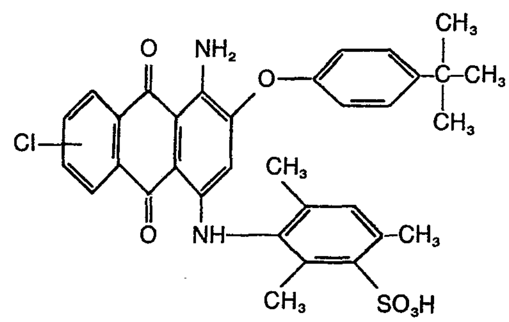

wird abgesaugt, in Wasser angeschlämmt, mit NaOH auf pH 7 gestellt und die neutrale Lösung mit 2 g Kochsalz pro 100 ml Lösung versetzt. Das ausgeschiedene Natriumsalz des Farbstoffes wird abgesaugt und mit einer 2%igen Kochsalzlösung gewaschen.

Der Farbstoff zeigt einen ausgezeichneten Aufbau auf synthetischen Polyamidfasern, die er in reinen, lichtechten und nassechten violetten Farbtönen anfärbt.

Einen Farbstoff mit ähnlichen Eigenschaften erhält man, wenn man die 54 Teile 1-Amino-2-p.-tert.-butyl-phenoxy-4-mesidino-6/7-chlor-anthrachinon durch 60 Teile 1-Amino-2-p-isooctylphen-

oxy-4-mesidino-6/7-chlor-anthrachinon ersetzt und im übrigen gemäss den obigen Angaben verfährt.

Beispiel 6

5 Teile 1-Amino-2-p-tert.-butylphenoxy-4-mesidino-6/7-chlor-anthrachinon werden in 150 Teilen Tetrachlorkohlenstoff gelöst und mit 2 Teilen Chlorsulfonsäure versetzt. Das Reaktionsgemisch wird 24 Stunden bei 70° gerührt, und der ausgeschiedene Farbstoff der Formel

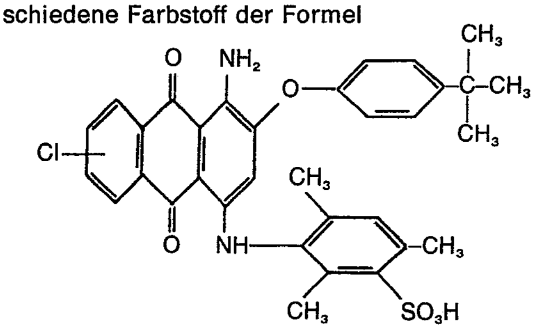

wird abgesaugt und mit Tetrachlorkohlenstoff gewaschen. Das Natriumsalz des Farbstoffes zeigt auf Polyamidfasern die gleichen färberischen Eigenschaften wie der Farbstoff des Beispiels 5.

Beispiel 7

Man trägt 80 Teile einer 50%igen Kalilauge in 200 Teile geschmolzenes p-tert.-Butylphenol ein und erhöht die Temperatur der Schmelze unter Abdestillieren des Wassers auf 180°. Nun fügt man 54,4 Teile des Kondensationsproduktes aus 1-Amino-4-brom-6/7-chlor-anthrachinon-2-sulfonsäure und 2,6-Diaminomesitylen-4-sulfonsäure hinzu und rührt bei 220° 4 Stunden weiter.

Man lässt die Temperatur auf 100° sinken, verdünnt mit 1000 Teilen Wasser, filtriert das Reaktionsprodukt ab und destilliert anschliessend das noch vorhandene p-tert.-Butylphenol mit Wasserdampf ab. 37 Teile des erhaltenen und getrockneten Produktes werden in 150 Teilen Oleum mit 10% $SO_3$-Gehalt gelöst und so lange bei 25 bis 30° gerührt, bis die Dünnschichtchromatographie kein Ausgangsmaterial mehr zeigt. Man giesst das Sulfonierungsgemisch in eine Eis-Salzwasser-Mischung und saugt das ausgeschiedene Sulfonierungsprodukt ab. Die so erhaltene Disulfonsäure wird in Wasser angeschlämmt, mit NaOH auf pH 7 gestellt und mit 25 g Natriumchlorid pro 100 ml Lösung versetzt. Das ausgeschiedene Produkt der Formel

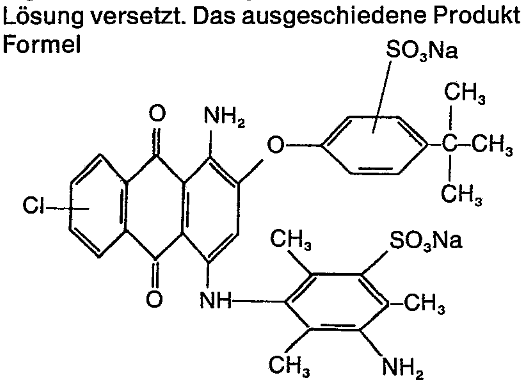

wird abgesaugt und getrocknet.

6 Teile dieses Produktes werden in 60 Teilen Wasser bei pH 7 gelöst. Dazu tropft man bei 15–20° während 30 Minuten 2,6 Teile a,β-Dibrompropionylchlorid, gelöst in 2 Volumteilen Aceton hinzu. Der pH-Wert des Reaktionsgemisches wird durch Zugabe einer 10%igen Natriumbicarbonatlösung auf 6,5 bis 7 gehalten. Man rührt noch 2 Stunden bei 15 bis 20° weiter, wobei der Farbstoff zum Teil ausgefallen ist. Durch Zugabe von 7 g Natriumchlorid pro 100 ml Lösung wird die Fällung des acylierten Farbstoffes vervollständigt. Der gebildete neue faserreaktive Anthrachinonfarbstoff der Formel

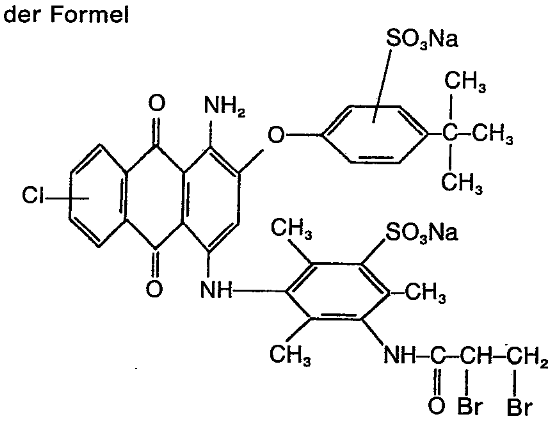

wird abgesaugt, mit 10%iger wässriger Kochsalzlösung gewaschen und bei 40–50° im Vakuum getrocknet.

Man erhält einen wasserlöslichen violetten Farbstoff, der Wolle vorzugsweise in Gegenwart von Egalisiermitteln (z.B. einem Kondensationsprodukt aus höheren aliphatischen Aminen mit Äthylenoxyd) aus essigsaurem Bade in nassechten brillanten violetten Tönen von guter Lichtechtheit färbt.

Verwendet man anstelle der 2,6 Teile α,β-Dibrompropionyl-chlorid 1,7 Teile α-Bromacrylsäurechlorid und verfährt gemäss den Angaben dieses Beispiels, so erhält man einen ähnlichen Reaktivfarbstoff mit gleich guten färberischen Eigenschaften.

Ersetzt man im obigen Beispiel die 2,6-Diaminomesitylen-4-sulfonsäure durch eine äquivalente Menge 1,4-Diamino-2,3,5,6-tetramethylbenzol, so erhält man bei im übrigen gleicher Arbeitsweise den Farbstoff der Formel

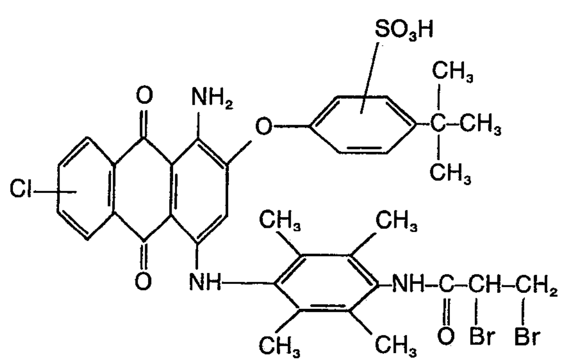

der auf Wolle ausgezeichnete Nassechtheiten zeigt.

Beispiel 8

54 Teile 1-Amino-2-p.-tert-butylphenoxy-4-mesidino-6/7-chlor-anthrachinon der Formel

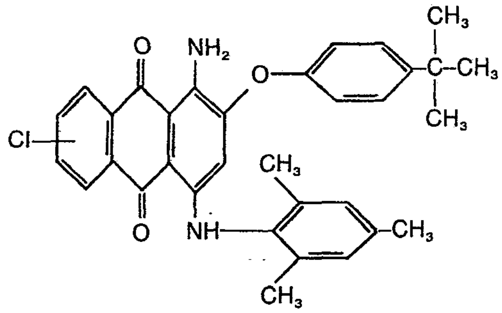

werden in 500 Teilen Oleum mit 10% $SO_3$-Gehalt gelöst und so lange bei 25° gerührt, bis die Dünnschichtchromatographie kein Ausgangsmaterial mehr zeigt. Man erhält die Disulfonsäure der Formel

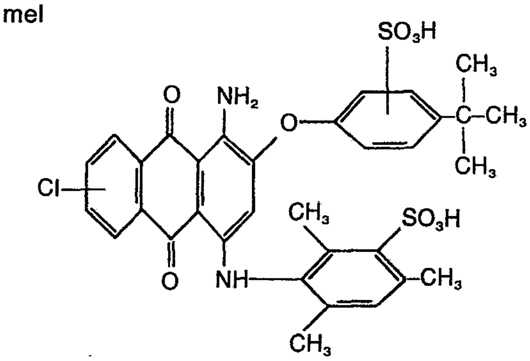

Anschliessend verdünnt man das Sulfonierungsgemisch mit 130 Teilen Wasser, wobei die Konzentration der $H_2SO_4$ auf ca. 80% verdünnt wird. Die Temperatur steigt bis auf 90°. Man erwärmt und rührt noch 1 Stunde bei 110°. Hierauf giesst man das Reaktionsgemisch in eine Mischung von Eis und Wasser. Die ausgeschiedene Monosulfonsäure wird abgesaugt, in 500 Teilen Wasser angeschlämmt und mit NaOH auf pH 7 gestellt. Durch Zusatz von 2 g Kochsalz pro 100 ml Lösung wird das Natriumsalz des neuen Farbstoffes der Formel

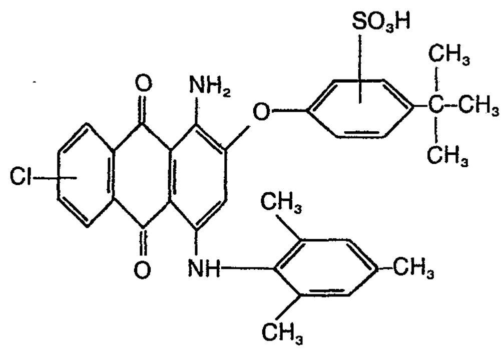

ausgefällt. Aus schwach saurem Bad zieht er sehr gut in violetten Tönen auf Polyamidfasern, und die Färbungen weisen vorzügliche Nassechtheiten auf.

Einen Farbstoff mit ähnlichen Eigenschaften erhält man, wenn man die 54 Teile 1-Amino-2-p-tert.-butylphenoxy-4-mesidino-6/7-chlor-anthrachinon durch 60 Teile 1-Amino-2-p-isooctylphenoxy-4-mesidino-6/7-chlor-anthrachinon ersetzt und im übrigen wie angegeben verfährt.

Beispiel 9

54 Teile 1-Amino-2-p-tert.-butylphenoxy-4-mesidino-6/7-chlor-anthrachinon werden in 500 Teilen Oleum mit 10% $SO_3$-Gehalt gelöst und 4 Stunden bei 25° gerührt. Man giesst das Sulfonierungsgemisch in eine Eis-Wasser-Mischung und saugt das ausgeschiedene Reaktionsprodukt ab. Die so erhaltene Disulfonsäure wird in Wasser angeschlämmt, mit NaOH auf pH 7 gestellt und mit 25 g Kochsalz pro 100 ml Lösung versetzt. Man erhält das Natriumsalz des Farbstoffes der Formel

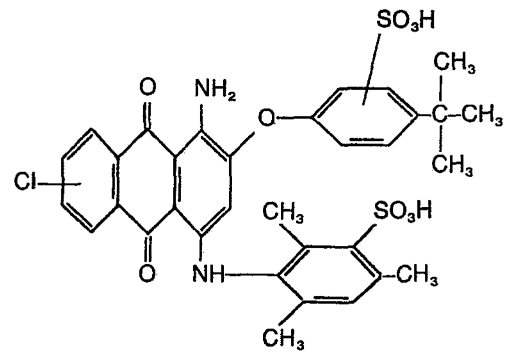

welches abgesaugt und getrocknet wird.

50 Teile dieses Farbstoffes werden in 200 Teilen Sulfolan bei 210° 1 Stunde angeschlämmt. Das Reaktionsgemisch wird mit 500 Teilen Wasser verdünnt und mit 20 Teilen Salzsäure konz. bei 40° versetzt. Die ausgeschiedene Monosulfonsäure der Formel

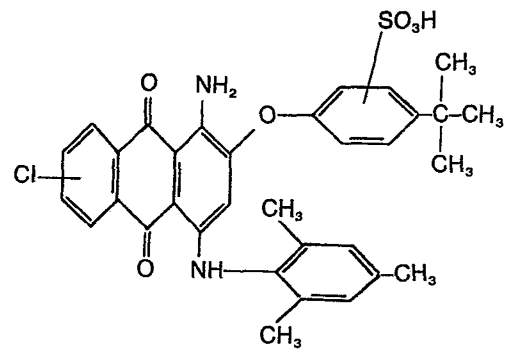

wird abgesaugt und wie im Beispiel 1 aufgearbeitet. Der neue Farbstoff zeigt auf Polyamidfasern die gleichen färberischen Eigenschaften wie der Farbstoff des Beispiels 8.

Den violetten Farbstoff obiger Formel mit Br anstatt Cl mit ähnlichen Eigenschaften erhält man, wenn man wie oben arbeitet, als Ausgangsverbindung jedoch 54 Teile 1-Amino-2-p.-tert.-butylphenoxy-4-mesidino-6/7-brom-anthrachinon einsetzt.

Beispiel 10

80 g des Natriumsalzes der Disulfonsäure der Formel

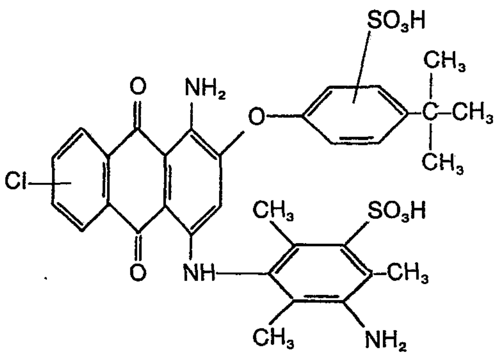

werden in 300 Teilen Sulfolan 1 Stunde bei 210° angeschlämmt. Das Reaktionsgemisch wird mit 750 Teilen Wasser verdünnt und mit 30 Teilen Salzsäure konz. bei 40° versetzt. Die ausgeschiedene Monosulfonsäure der Formel

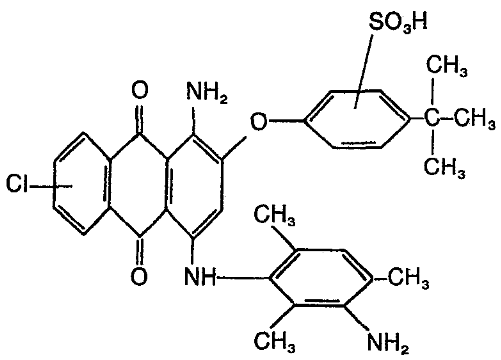

wird abgesaugt und getrocknet.

6 Teile dieser Anthrachinonbase werden in 60 Teilen Wasser bei pH 7 gelöst. Nun tropft man in 10 Minuten bei 15–20° 1 Teil Acetylchlorid zu, wobei der pH-Wert des Reaktionsgemisches durch Zugabe einer 5%igen Natronlauge auf 6,5–7,5 gehalten wird. Man rührt noch 3 Stunden bei 15–20° aus. Durch Zugabe von 10 g Kochsalz pro 100 ml Lösung wird der acylierte Farbstoff der Formel

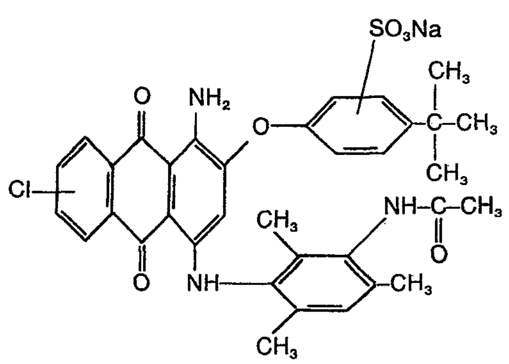

ausgefällt. Man erhält ein wasserlösliches, blaustichig violettes Pulver, das auf Polyamid ein sehr gutes Ausziehvermögen zeigt.

Ersetzt man im obigen Beispiel 1 Teil Acetylchlorid durch 2 Teile Dibrompropionylchlorid, so erhält man den Farbstoff der Formel

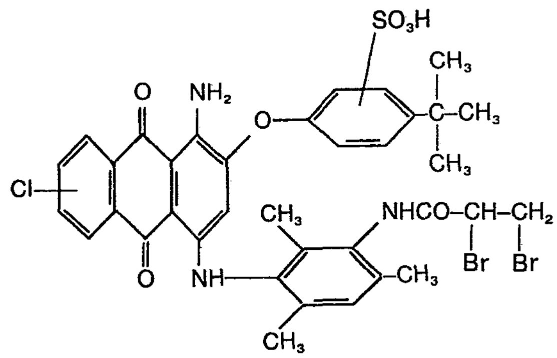

der auf Wolle ausgezeichnete Nassechtheiten zeigt.

Beispiel 11

6 Teile des Farbstoffes gemäss Beispiel 9 werden mit 1,5 Teilen N-Methylolchloracetamid in 25 Teilen 95%iger Schwefelsäure bei 0–5° portionsweise gelöst. Man rührt noch 15 Stunden bei 0–5° aus, giesst das Reaktionsgemisch in Eis-Wasser und saugt den ausgeschiedenen Farbstoff ab. Das Nutschgut wird in Wasser angeschlämmt und mit Natronlauge auf pH 7 gestellt. Durch Zugabe von 5 g Kochsalz pro 100 ml Lösung wird das Natriumsalz des Farbstoffs der Formel

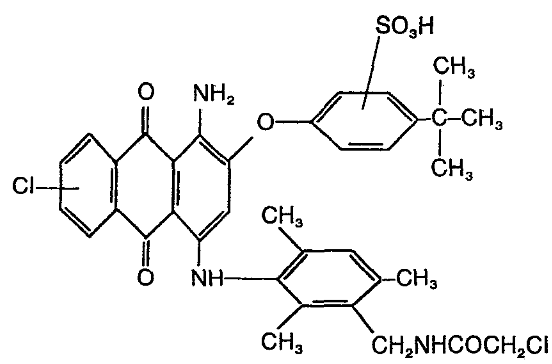

ausgefällt. Dieser färbt Polyamidfasern in violetten Tönen mit einem sehr guten Ausziehvermögen und guten Nassechtheiten.

Beispiel 12

Man bereitet ein Färbebad aus 4000 Teilen Wasser, 4 Teilen Ammoniumacetat, 2 Teilen des Farbstoffes gemäss Beispiel 1 und soviel Essigsäure, dass der Ph-Wert des Bades 6,0 beträgt. In das erhaltene Färbebad geht man mit 100 Teilen eines synthetischen Polyamidtricots ein, erhitzt es innerhalb einer halben Stunde zum Kochen und färbt 45 Minuten bei 100°. Man erhält eine violette Färbung, die einen guten Ausziehgrad des Farbstoffes aufweist.

**Patentansprüche**

1. Neue wasserlösliche Anthrachinonfarbstoffe und deren Mischungen, die in Form der freien Säure der Formel I

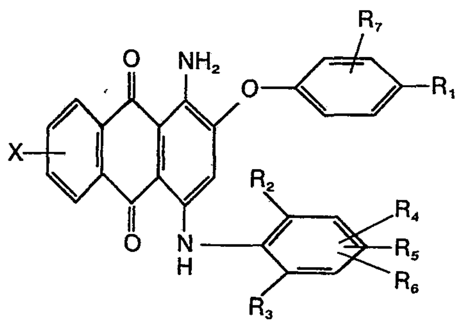

(I)

entsprechen, worin bedeuten:

X Halogen, $R_1$ einen unverzweigten oder verzweigten Alkylrest mit 4 bis 8 Kohlenstoffatomen, $R_2$ und $R_3$ unabhängig voneinander einen unverzweigten oder verzweigten Alkylrest mit 1 bis 4 Kohlenstoffatomen, $R_4$ Wasserstoff, einen unverzweigten oder verzweigten Alkylrest mit 1 bis 4 Kohlenstoffatomen, eine gegebenenfalls acylierte Aminogruppe oder die Gruppe –NHZ, wobei Z einen faserreaktiven Rest bedeutet, $R_5$ Wasserstoff oder einen unverzweigten oder verzweigten Alkylrest mit 1 bis 4 Kohlenstoffatomen, $R_6$ und $R_7$ unabhängig voneinander, Wasserstoff, eine $-SO_3H$-Gruppe, Halogen oder einen Rest der Formel $-CH_2-NH-CO-Y$, wobei Y einen gegebenenfalls durch ein oder zwei Halogenatome substituierten Alkyl- oder Alkenylrest mit 1 bis 4 Kohlenstoffatomen oder einen gegebenenfalls durch Halogen oder einen Alkylrest mit 1 bis 4 Kohlenstoffatomen substituierten Phenylrest darstellt, mit der Bedingung, dass mindestens einer der Reste $R_6$ oder $R_7$ die $-SO_3H$-Gruppe bedeutet.

2. Anthrachinonverbindungen gemäss Anspruch 1, dadurch gekennzeichnet, dass $R_1$ einen verzweigten Alkylrest mit 4 bis 8 Kohlenstoffatomen, insbesondere den tert.-Butylrest, bedeutet.

3. Anthrachinonverbindungen gemäss Anspruch 1, dadurch gekennzeichnet, dass $R_2$ und $R_3$ je den Methylrest bedeuten.

4. Anthrachinonverbindungen gemäss Anspruch 1, dadurch gekennzeichnet, dass X ein Chloratom bedeutet.

5. Anthrachinonverbindungen gemäss Anspruch 1, dadurch gekennzeichnet, dass von den Gruppen $R_6$ und $R_7$ die eine Wasserstoff und die andere einen $-SO_3H$-Rest bedeutet.

6. Anthrachinonverbindungen gemäss Anspruch 1, dadurch gekennzeichnet, dass $R_5$ eine Methylgruppe in p-Stellung zur Aminogruppe bedeutet.

7. Anthrachinonverbindungen gemäss Anspruch 1, dadurch gekennzeichnet, dass $R_1$ den tert.-Butylrest, $R_2$, $R_3$ und $R_5$ je eine Methylgruppe, wobei $R_5$ in p-Stellung zur Aminogruppe steht, X ein Chloratom und von den Gruppen $R_6$ und $R_7$ die eine Wasserstoff und die andere einen $-SO_3H$-Rest bedeutet.

8. Anthrachinonverbindung gemäss Anspruch 1 der Formel

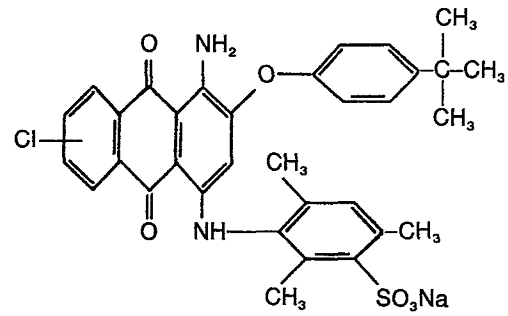

9. Anthrachinonverbindungen gemäss Anspruch 1 der Formel

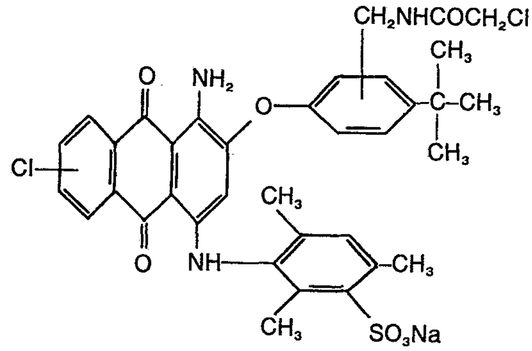

10. Verfahren zur Herstellung neuer, wasserlöslicher Anthrachinonfarbstoffe, die in Form der freien Säure der Formel II

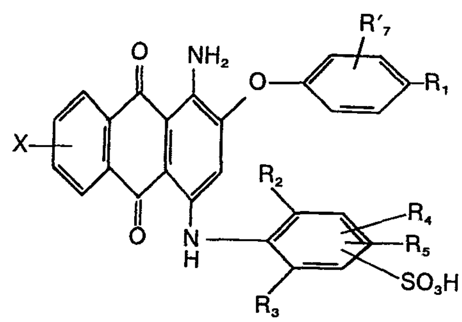

(II)

entsprechen, worin bedeuten:

X Halogen, $R_1$ einen unverzweigten oder verzweigten Alkylrest mit 4 bis 8 Kohlenstoffatomen, $R_2$ und $R_3$ unabhängig voneinander einen unverzweigten oder verzweigten Alkylrest mit 1 bis 4 Kohlenstoffatomen, $R_4$ Wasserstoff, einen unverzweigten oder verzweigten Alkylrest mit 1 bis 4 Kohlenstoffatomen, eine gegebenenfalls acylierte Aminogruppe oder die Gruppe –NHZ, wobei Z einen faserreaktiven Rest bedeutet, $R_5$ Wasserstoff oder einen unverzweigten oder verzweigten Alkylrest mit 1 bis 4 Kohlenstoffatomen, $R'_7$ Wasserstoff, Halogen oder einen Rest der Formel $-CH_2-NH-CO-Y$, wobei Y einen gegebenenfalls durch ein oder zwei Halogenatome substituierten Alkyl- oder Alkenylrest mit 1 bis 4 Kohlenstoffatomen oder einen gegebenenfalls durch Halogen oder einen Alkylrest mit 1 bis 4 Kohlenstoffatomen substituierten Phenylrest darstellt, dadurch gekennzeichnet, dass man eine Anthrachinonverbindung der Formel V

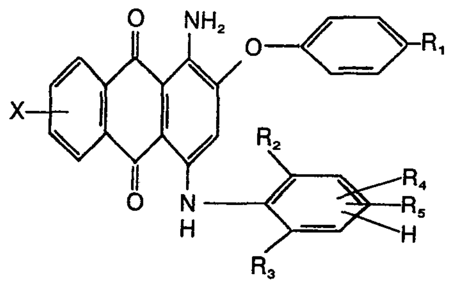

(V)

worin X, $R_1$, $R_2$, $R_3$, $R_4$ und $R_5$ die oben angegebene Bedeutung aufweisen, mit Oleum, enthaltend 4 bis 65 Gewichtsprozent freies Schwefeltrioxid, bei einer Temperatur von 0 bis 5 °C, wobei die Konzentration an freiem $SO_3$ im Reaktionsgemisch 4 bis 6% beträgt oder mit einer äquivalenten Menge Chlorsulfonsäure in einem halogenierten Kohlenwasserstoff bei einer Temperatur von 50 bis 80 °C sulfoniert, und, falls $R_4$ in Formel V eine acylierbare Aminogruppe ist, gegebenenfalls anschliessend mit einer den Acylrest oder den faserreaktiven Rest Z einführenden Verbindung umsetzt, und gegebenenfalls anschliessend das Produkt mit einem halogenabgebenden Mittel umsetzt, oder mit einem N-Methylolamid, das am N-Atom die Gruppe –COY trägt, in saurem Medium umsetzt, wobei Y die oben angegebene Bedeutung hat.

11. Verfahren gemäss Anspruch 10, dadurch gekennzeichnet, dass die Monosulfonierung der Anthrachinonverbindung der Formel V mit Oleum, enthaltend 4 bis 65 Gewichtsprozent freies Schwefeltrioxid, bei einer Temperatur von 0 bis 2 °C durchgeführt wird.

12. Verfahren gemäss Anspruch 11, dadurch gekennzeichnet, dass die Monosulfonierung der Anthrachinonverbindung der Formel V mit Oleum, enthaltend 20 bis 30, insbesondere 25 Gewichtsprozent freies Schwefeltrioxid, durchgeführt wird.

13. Verfahren gemäss Anspruch 10, dadurch gekennzeichnet, dass die Monosulfonierung der Anthrachinonverbindung der Formel V mit einer äquivalenten Menge Chlorsulfonsäure in Tetrachlorkohlenstoff, bei einer Temperatur von 50 bis 80 °C durchgeführt wird.

14. Abänderung des Verfahrens zur Herstellung von Anthrachinonfarbstoffen der Formel II, worin $R'_7$ Wasserstoff ist, gemäss Anspruch 10, dadurch gekennzeichnet, dass man eine Anthrachinonverbindung der Formel VI

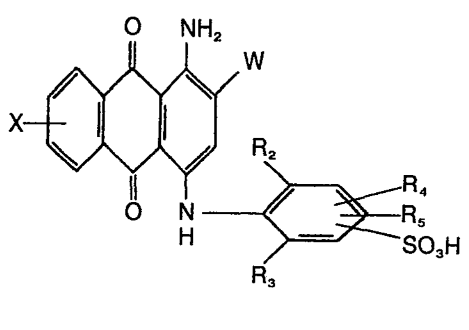

(VI)

worin X, $R_2$, $R_3$, $R_4$ und $R_5$ die oben angegebene Bedeutung haben, und W Halogen oder eine $-SO_3H$-Gruppe darstellt, mit einem p-Alkylphenol der Formel VII

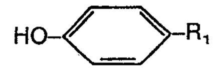

(VII)

worin $R_1$ die oben angegebene Bedeutung hat, in Gegenwart von säurebindenden Mitteln bei erhöhter Temperatur umsetzt, und, falls $R_4$ in Formel VI eine acylierbare Aminogruppe ist, gegebenenfalls anschliessend mit einer den Acylrest oder den faserreaktiven Rest Z einführenden Verbindung umsetzt.

15. Verfahren gemäss Anspruch 14, dadurch gekennzeichnet, dass die Umsetzung der Anthrachinonverbindung der Formel VI mit dem Phenol der Formel VII bei einer Temperatur von 180 bis 240 °C, insbesondere 220 °C, durchgeführt wird.

16. Verfahren zur Herstellung neuer wasserlöslicher Anthrachinonfarbsotffe, die in Form der freien Säure der Formel III

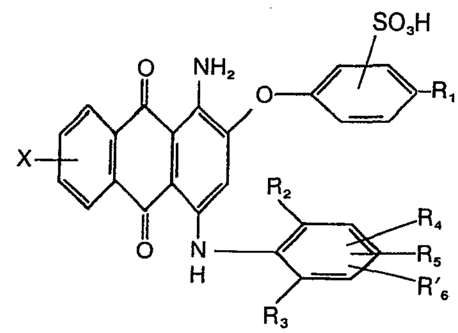

(III)

entsprechen, worin bedeuten:

X Halogen, $R_1$ einen unverzweigten oder verzweigten Alkylrest mit 4 bis 8 Kohlenstoffatomen, $R_2$ und $R_3$ unabhängig voneinander einen unverzweigten oder verzweigten Alkylrest mit 1 bis 4 Kohlenstoffatomen, $R_4$ Wasserstoff, einen unverzweigten oder verzweigten Alkylrest mit 1 bis 4 Kohlenstoffatomen, eine gegebenenfalls acylierte Aminogruppe oder die Gruppe –NHZ, wobei Z einen faserreaktiven Rest bedeutet, $R_5$ Wasserstoff oder einen unverzweigten oder verzweigten Alkylrest mit 1 bis 4 Kohlenstoffatomen, $R'_6$ Wasserstoff, Halogen oder einen Rest der Formel $-CH_2-NH-CO-Y$, wobei Y einen gegebenenfalls durch ein oder zwei Halogenatome substituierten Alkyl- oder Alkenylrest mit 1 bis 4 Kohlenstoffatomen oder einen gegebenenfalls durch Halogen oder einen Alkylrest mit 1 bis 4 Kohlenstoffatomen substituierten Phenylrest darstellt, dadurch gekennzeichnet, dass man eine Anthrachinonverbindung der Formel IV

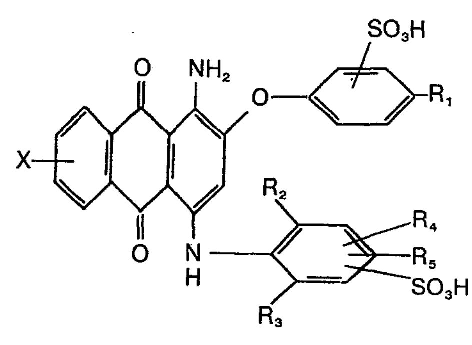

(IV)

worin X, $R_1$, $R_2$, $R_3$, $R_4$ und $R_5$ die oben angegebene Bedeutung haben, im Anilinring mit 60 bis 90%iger wässriger Schwefelsäure bei einer Temperatur von 80 bis 120 °C oder mit Sulfolan bei einer Temperatur von 180 bis 220 °C desulfoniert, und gegebenenfalls anschliessend das Produkt mit einem halogenabgebenden Mittel umsetzt, oder mit einem N-Methylolamid, das am N-Atom die Gruppe –COY trägt, in saurem Medium umsetzt, wobei Y die oben angegebene Bedeutung hat.

17. Verfahren gemäss Anspruch 16, dadurch gekennzeichnet, dass die Desulfonierung der Anthrachinonverbindung der Formel IV mit 80%iger wässriger Schwefelsäure bei einer Temperatur von 110 °C durchgeführt wird.

18. Verfahren gemäss Anspruch 16, dadurch gekennzeichnet, dass die Desulfonierung der Anthrachinonverbindung der Formel IV mit Sulfolan bei einer Temperatur von 210 °C durchgeführt wird.

19. Verfahren zur Herstellung neuer wasserlöslicher Anthrachinonfarbstoffe, die in Form der freien Säure der Formel IV

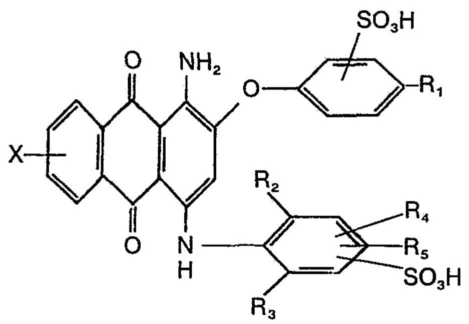

(IV)

entsprechen, worin bedeuten:

X Halogen, $R_1$ einen unverzweigten oder verzweigten Alkylrest mit 4 bis 8 Kohlenstoffatomen, $R_2$ und $R_3$ unabhängig voneinander einen unverzweigten oder verzweigten Alkylrest mit 1 bis 4 Kohlenstoffatomen, $R_4$ Wasserstoff, einen unverzweigten oder verzweigten Alkylrest mit 1 bis 4 Kohlenstoffatomen, eine gegebenenfalls acylierte Aminogruppe oder die Gruppe –NHZ, wobei Z einen faserreaktiven Rest bedeutet, $R_5$ Wasserstoff oder einen unverzweigten oder verzweigten Alkylrest mit 1 bis 4 Kohlenstoffatomen, dadurch gekennzeichnet, dass man eine Anthrachinonverbindung der Formel V

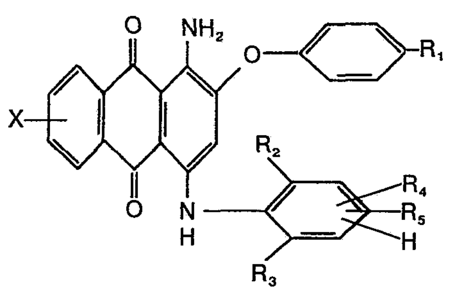

(V)

worin X, $R_1$, $R_2$, $R_3$, $R_4$ und $R_5$ die oben angegebene Bedeutung haben, bei einer Temperatur von 10 bis 40 °C mit Oleum, enthaltend 1 bis 20% freies Schwefeltrioxid, sulfoniert, so dass zwei Sulfonsäuregruppen eingeführt werden, und, falls $R_4$ in Formel V eine acylierbare Aminogruppe ist, gegebenenfalls anschliessend mit einer den Acylrest oder den faserreaktiven Rest Z überführenden Verbindung umsetzt.

20. Verfahren gemäss Anspruch 19, dadurch gekennzeichnet, dass man die Sulfonierung bei einer Temperatur von etwa 20° mit Oleum, enthaltend 5 bis 10% freies Schwefeltrioxid, durchführt.

21. Verwendung der wasserlöslichen Anthrachinonfarbstoffe gemäss Anspruch 1 zum Färben oder Bedrucken von Textilmaterialien, vor allem von natürlichen oder synthetischen Polyamidmaterialien.

22. Das mit den Anthrachinonfarbstoffen gemäss Anspruch 1 gefärbte oder bedruckte Textilmaterial, vor allem natürliches oder synthetisches Polyamidmaterial.

## Claims

1. A novel water-soluble anthraquinone dye or a mixture of such day which, in the form of the free acid, have the formula I

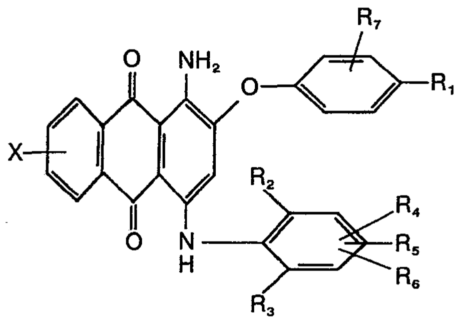

(I)

in which X is halogen, $R_1$ is an unbranched or branched alkyl radical having 4 to 8 carbon atoms, $R_2$ and $R_3$ independently of each other are an unbranched or branched alkyl radical having 1 to 4 carbon atoms, $R_4$ is hydrogen, an unbranched or branched alkyl radical having 1 to 4 carbon atoms, a free or acylated amino group or the –NHZ group, in which Z is a fibre-reactive radical, $R_5$ is hydrogen or an unbranched or branched alkyl radical having 1 to 4 carbon atoms and $R_6$ and $R_7$ independently of each other are hydrogen, an unbranched or branched alkyl radical having 1 to 4 carbon atoms, a $-SO_3H$ group, halogen or a radical of the formula $-CH_2-NH-CO-Y$, in which Y is an alkyl or alkenyl radical having 1 to 4 carbon atoms which is unsubstituted or substituted by one or two halogen atoms, or is a phenyl radical which is unsubstituted or substituted by halogen or an alkyl radical having 1 to 4 carbon atoms, with the proviso that at least one of the radicals $R_6$ or $R_7$ is a $-SO_3H$ group.

2. An anthraquinone compound according to claim 1, wherein $R_1$ is a branched alkyl radical having 4 to 8 carbon atoms, in particular the tertbutyl radical.

3. An anthraquinone compound according to claim 1, wherein each of $R_2$ and $R_3$ is a methyl radical.

4. An anthraquinone compound according to claim 1, wherein X is a chlorine atom.

5. An anthraquinone compound according to claim 1, wherein one of the groups $R_6$ and $R_7$ is hydrogen and the other is a $-SO_3H$ radical.

6. An anthraquinone compound according to claim 1, wherein $R_5$ is a methyl group in the p-position relative to the amino group.

7. An anthraquinone compound according to claim 1, wherein $R_1$ is a tert-butyl radical, each of $R_2$, $R_3$ and $R_5$ is a methyl group, and $R_5$ is in the p-position relative to the amino group, X is a chlorine atom and one of the groups $R_6$ and $R_7$ is hydrogen and the other is a $-SO_3H$ radical.

8. An anthraquinone compound according to claim 1 of the formula

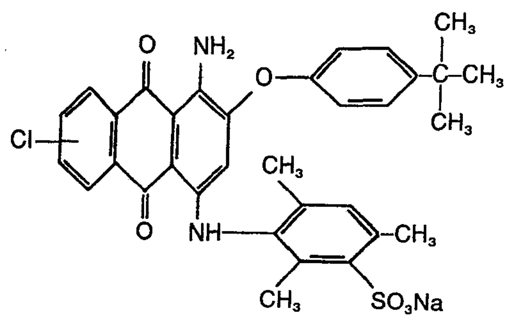

9. An anthraquinone compound according to claim 1 of the formula

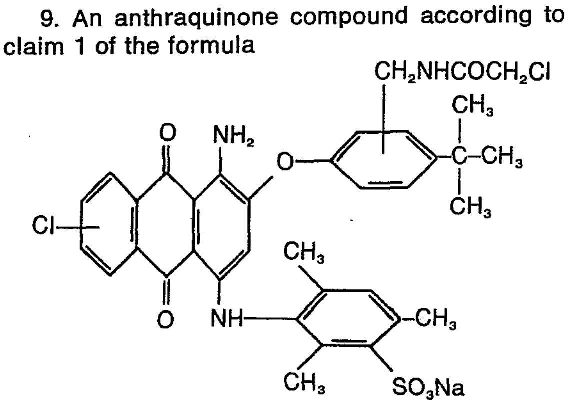

10. A process for the preparation of a novel, water-soluble anthraquinone dye which, in the form of the free acid, has the formula II

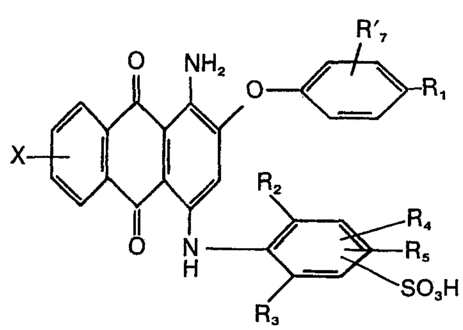 (II)

in which X is halogen, $R_1$ is an unbranched or branched alkyl radical having 4 to 8 carbon atoms, $R_2$ and $R_3$ independently of each other are an unbranched or branched alkyl radical having 1 to 4 carbon atoms, $R_4$ is hydrogen, an unbranched or branched alkyl radical having 1 to 4 carbon atoms, a free or acylated amino group or the $-NHZ$ group, in which Z is a fibre-reactive radical, $R_5$ is hydrogen or an unbranched or branched alkyl radical having 1 to 4 carbon atoms and $R'_7$ is hydrogen, halogen or a radical of the formula $-CH_2-NH-CO-Y$, in which Y is an alkyl or alkenyl radical having 1 to 4 carbon atoms which is unsubstituted or substituted by one or two halogen atoms, or is a phenyl radical which is unsubstituted or substituted by halogen or an alkyl radical having 1 to 4 carbon atoms, which process comprises sulfonating an anthraquinone compound of the formula V

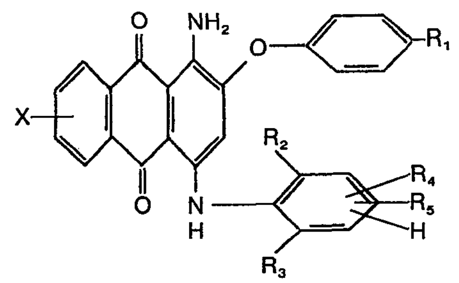 (V)

in which X, $R_1$, $R_2$, $R_3$, $R_4$ and $R_5$ are as defined above, with oleum containing 4 to 65% by weight of free sulfur trioxide, at a temperature from 0 to 5 °C, such that the concentration of free $SO_3$ in the reaction mixture is 4 to 6%, or with an equivalent amount of chlorosulfonic acid in a halogenated hydrocarbon at a temperature from 50 to 80 °C, and, if $R_4$ in formula V is an acylatable amino group, if desired subsequently reacting the sulfonated anthraquinone compound with a compound which introduces the acyl radical or the fibre reactive radical Z, and, if desired, subsequently reacting the product with a halogen donor or with a N-methylolamide which carries the $-COY$ group at the N-atom, in acid medium, Y being as defined above.

11. A process according to claim 10, wherein the monosulfonation of the anthraquinone compound of the formula V with oleum containing 4 to 65% by weight of free sulfur trioxide is carried out at a temperature of 0 to 2 °C.

12. A process according to claim 11, wherein the monosulfonation of the anthraquinone compound of the formula V is carried out with oleum containing 20 to 30% by weight, in particular 25% by weight, of free sulfur trioxide.

13. A process according to claim 10, wherein the monosulfonation of the anthraquinone compound of the formula V is carried out with an equivalent amount of chlorosulfonic acid in carbon tetrachloride at a temperature of 50 to 80 °C.

14. A modification of the process for the preparation of an anthraquinone dye of the formula II, wherein $R'_7$ is hydrogen, according to claim 10, which comprises reacting an anthraquinone compound of the formula VI

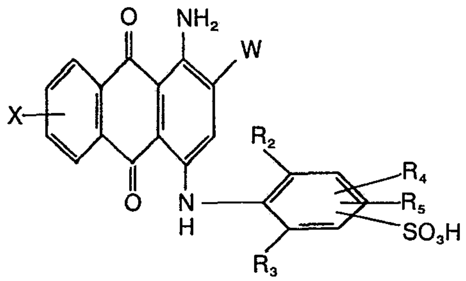

(VI)

in which X, $R_2$, $R_3$, $R_4$ and $R_5$ are as defined above and W is halogen or a $-SO_3H$ group, with a p-alkylphenol of the formula VII

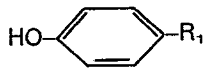

(VII)

in which $R_1$ is as defined above, in the presence of acid acceptors and at elevated temperature, and, if $R_4$ in formula VI is an acylatable amino group, if desired subsequently reacting the product with a compound which introduces the acyl radical or the fibre-reactive radical Z.

15. A process according to claim 14, wherein the reaction of the anthraquinone compound of the formula VI with the phenol of the formula VII is carried out at a temperature of 180 to 240 °C and in particular 220 °C.

16. A process for the preparation of a novel, water-soluble anthraquinone dye which, in the form of the free acid, has the formula III

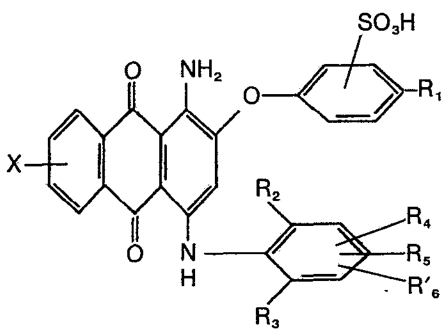

(III)

in which X is halogen, $R_1$ is an unbranched or branched alkyl radical having 4 to 8 carbon atoms, $R_2$ and $R_3$ independently of each other are an unbranched or branched alkyl radical having 1 to 4 carbon atoms, $R_4$ is hydrogen, an unbranched or branched alkyl radical having 1 to 4 carbon atoms, a free or acylated amino group or the $-NHZ$ group, in which Z is a fibre-reactive radical, $R_5$ is hydrogen or an unbranched or branched alkyl radical having 1 to 4 carbon atoms and $R'_6$ is hydrogen, halogen or a radical of the formula $-CH_2-NH-CO-Y$, in which Y is an alkyl or alkenyl radical having 1 to 4 carbon atoms which is unsubstituted or substituted by one or two halogen atoms, or is a phenyl radical which is unsubstituted or substituted by halogen or an alkyl radical having 1 to 4 carbon atoms, which comprises effecting desulfonation in the aniline ring of an anthraquinone compound of the formula IV

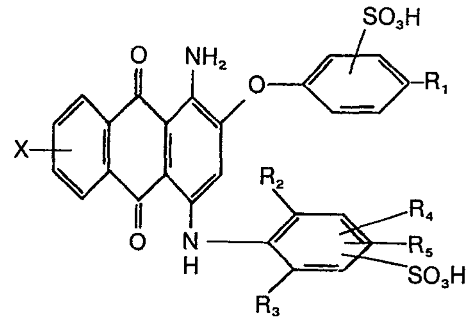

(IV)

in which X, $R_1$, $R_2$, $R_3$, $R_4$ and $R_5$ are as defined above, with 60 to 90% aqueous sulfuric acid at a temperature of 80 to 120 °C, or with sulfolane at a temperature of 180 to 220 °C, and if desired subsequently reacting the product with a halogen donor or with a N-methylolamide which carries the $-COY$ group at the N-atom, in acid medium, Y having the meaning given above.

17. A process according to claim 16, wherein the desulfonation of the anthraquinone compound of the formula IV is carried out with 80% aqueous sulfuric acid at a temperature of 110 °C.

18. A process according to claim 16, wherein the desulfonation of the anthraquinone compound of the formula IV is carried out with sulfolane at a temperature of 210 °C.

19. A process for the preparation of a novel, water-soluble anthraquinone dye which, in the form of the free acid, has the formula IV

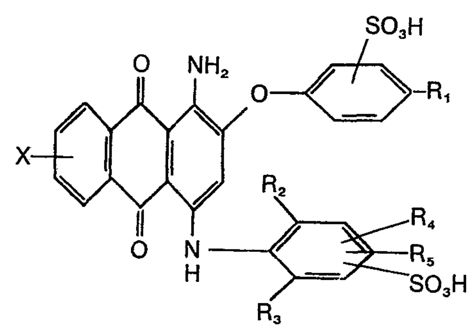

(IV)

in which X is halogen, $R_1$ is an unbranched or branched alkyl radical having 4 to 8 carbon atoms, $R_2$ and $R_3$ independently of each other are an unbranched or branched alkyl radical having 1 to 4 carbon atoms, $R_4$ is hydrogen, an unbranched or branched alkyl radical having 1 to 4 carbon atoms, a free or acylated amino group or the $-NHZ$ group, in which Z is a fibre-reactive radical, and $R_5$ is hydrogen or an unbranched or branched alkyl radical having 1 to 4 carbon atoms, which process comprises sulfonating an anthraquinone compound of the formula V

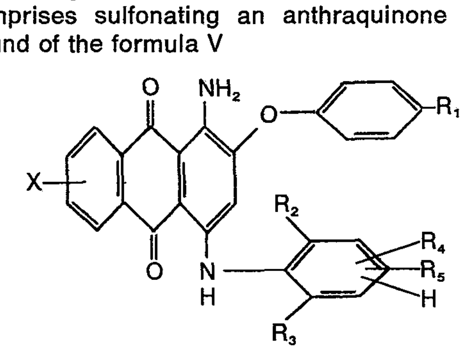

(V)

in which X, $R_1$, $R_2$, $R_3$, $R_4$ and $R_5$ are as defined above, at a temperature of 10 to 40 °C, with oleum containing 1 to 20% of free sulfur trioxide, such that two sulfonic acid groups are introduced and, if $R_4$ in formula V is an acylatable amino group, if desired subsequently reacting the product with a compound which introduces the acyl radical or the fibre-reactive radical Z.

20. A process according to claim 19, wherein the sulfonation is carried out at a temperature of about 20 °C, with oleum containing 5 to 10% of free sulfur trioxide.

21. The use of a water-soluble anthraquinone dye according to claim 1 for dyeing or printing textile material, in particular natural and synthetic polyamide materials.

22. The textile material, in particular natural or synthetic polyamide material, dyed or printed with an anthraquinone dye according to claim 1.

**Revendications**

1. Nouveaux colorants anthraquinonique solubles dans l'eau et leurs mélanges, qui correspondent, sous forme de l'acide libre, à la formule I:

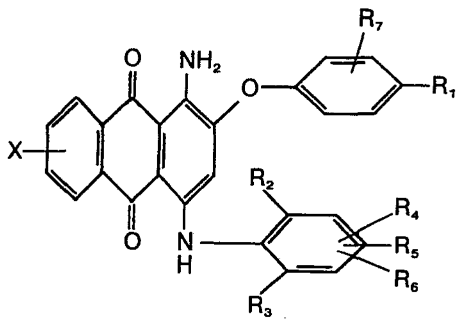

(I)

où

X représente un halogène; $R_1$ un reste alkyle ramifié ou non-ramifié ayant 4 à 8 atomes de carbone; $R_2$ et $R_3$, indépendamment l'un de l'autre, chacun un reste alkyle ramifié ou non-ramifié ayant 1 à 4 atomes de carbone; $R_4$ l'hydrogène, un reste alkyle ramifié ou non-ramifié ayant 1 à 4 atomes de carbone, un groupe amino éventuellement acylé, ou le groupe –NHZ, où Z représente un reste réactif avec les fibres; $R_5$ l'hydrogène ou un reste alkyle ramifié ou non-ramifié ayant 1 à 4 atomes de carbone; $R_6$ et $R_7$, indépendamment l'un de l'autre, l'hydrogène, un groupe $-SO_3H$, un halogène ou un reste de formule $-CH_2-NH-CO-Y$, où Y représente un reste alkyle ou alcényle ayant 1 à 4 atomes de carbone, éventuellement substitué par un ou deux atomes d'halogène ou bien un reste phényle éventuellement substitué par un halogène ou un reste alkyle ayant 1 à 4 atomes de carbone, avec la condition qu'au moins un des restes $R_6$ ou $R_7$ représente le groupe $-SO_3H$.

2. Composés anthraquinoniques selon la revendication 1, caractérisés par le fait que $R_1$ représente un reste alkyle ramifié ayant 4 à 8 atomes de carbone, en particulier le reste tert.-butyle.

3. Composés anthraquinoniques selon la revendication 1, caractérisés par le fait que $R_2$ et $R_3$ représentent chacun le reste méthyle.

4. Composés anthraquinoniques selon la revendication 1, caractérisés par le fait que X représente un atome de chlore.

5. Composés anthraquinoniques selon la revendication 1, caractérisés par le fait que parmi les groupes $R_6$ et $R_7$ l'un représente l'hydrogène et l'autre représente un reste $-SO_3H$.

6. Composés anthraquinoniques selon la revendication 1, caractérisés par le fait que $R_5$ représente un groupe méthyle en position para relativement au groupe amino.

7. Composés anthraquinoniques selon la revendication 1, caractérisés par le fait que $R_1$ représente le reste tert.-butyle; $R_2$, $R_3$ et $R_5$ représentent chacun un groupe méthyle; $R_5$ se trouvant en position para relativement au groupe amino; X représente un atome de chlore, et parmi les groupes $R_6$ et $R_7$ l'un représente l'hydrogène et l'autre représente un reste $-SO_3H$.

8. Composé anthraquinonique selon la revendication 1 de formule:

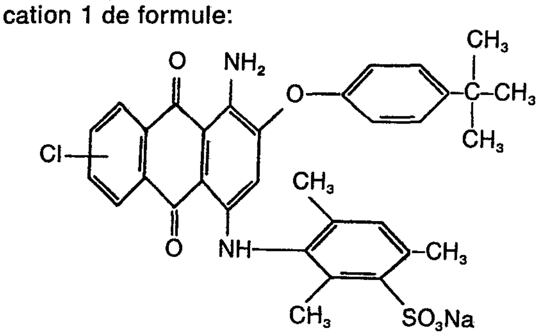

9. Composés anthraquinoniques selon la revendication 1 de formule:

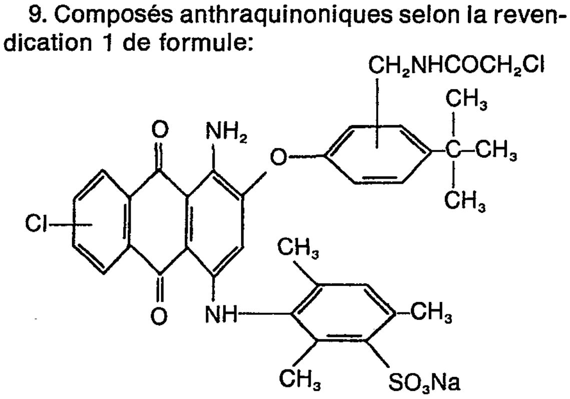

10. Procédé de préparation de nouveaux colorants anthraquinoniques solubles dans l'eau, qui correspondent, sous forme de l'acide libre, à la formule II:

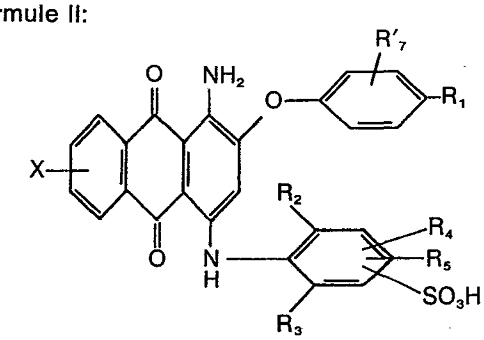

(II)

où

X représente un halogène; $R_1$ un reste alkyle ramifié ou non-ramifié ayant 4 à 8 atomes de car-

bone; $R_2$ et $R_3$, indépendamment l'un de l'autre, chacun un reste alkyle ramifié ou non-ramifié ayant 1 à 4 atomes de carbone; $R_4$ l'hydrogène, un reste alkyle ramifié ou non-ramifié ayant 1 à 4 atomes de carbone, un groupe amino éventuellement acylé ou le groupe –NHZ, où Z représente un reste réactif avec les fibres; $R_5$ l'hydrogène ou un reste alkyle ramifié ou non-ramifié ayant 1 à 4 atomes de carbone; $R'_7$ l'hydrogène, un halogène ou un reste de formule $-CH_2-NH-CO-Y$, où Y représente un reste alkyle ou alcényle ayant 1 à 4 atomes de carbone, éventuellement substitué par un ou deux atomes d'halogène, ou bien un reste phényle éventuellement substitué par de l'halogène ou par un reste alkyle ayant 1 à 4 atomes de carbone, caractérisé par le fait que l'on sulfone un composé anthraquinonique de formule V

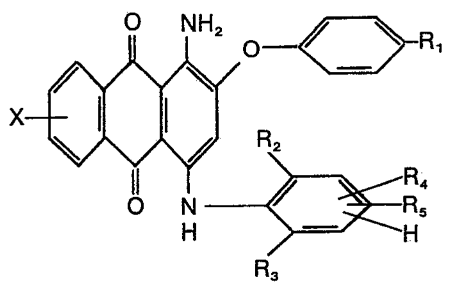

(V)

où X, $R_1$, $R_2$, $R_3$, $R_4$ et $R_5$ ont la signification indiquée ci-dessus, avec de l'oléum, contenant 4 à 65 pour cent en poids d'anhydride sulfurique libre, à une température comprise entre 0 et 5 °C, la concentration en $SO_3$ libre dans le mélange réactionnel s'élevant entre 4 et 6%, ou avec une quantité équivalente de chlorhydrine sulfurique dans un hydrocarbure halogéné à une température comprise entre 50 et 80 °C, et, dans le cas où $R_4$ dans la formule V représente un groupe amino acylable, on fait ensuite éventuellement réagir avec un composé introduisant le reste acyle ou le reste Z réactif avec les fibres, puis on fait éventuellement réagir le produit avec un agent donneur d'halogène, ou bien on le fait réagir en milieu acide avec un N-méthylolamide, qui porte sur l'atome d'azote le groupe –COY, Y ayant la signification indiquée ci-dessus.

11. Procédé selon la revendication 10, caractérisé par le fait que la monosulfonation du composé anthraquinonique de formule V est effectuée avec de l'oléum, contenant 4 à 65 pour cent en poids d'anhydride sulfurique libre, à une température comprise entre 0 et 2 °C.

12. Procédé selon la revendication 11, caractérisé par le fait que la monosulfonation du composé anthraquinonique de formule V est effectuée avec de l'oléum, contenant 20 à 30, en particulier 25 pour cent en poids d'anhydride sulfurique libre.

13. Procédé selon la revendication 10, caractérisé par le fait que la monosulfonation du composé anthraquinonique de formule V est effectuée avec une quantité équivalente de chlorhydrine sulfonique dans la tétrachlorure de carbone, à une température comprise entre 50 et 80 °C.

14. Modification du procédé de préparation des colorants anthraquinoniques de formule II où $R'_7$ est l'hydrogène, selon la revendication 10, caractérisée par le fait que l'on fait réagir un composé anthraquinonique de formule VI

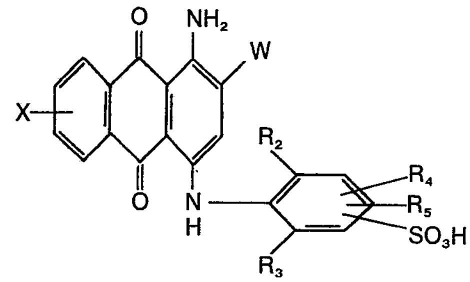

(VI)

où X, $R_2$, $R_3$, $R_4$ et $R_5$ ont la signification indiquée ci-dessus, et W représente un halogène ou un groupe $-SO_3H$, avec un p-alkylphénol de formule VII

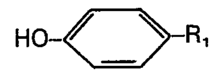

(VII)

où $R_1$ a la signification indiquée ci-dessus, en présence d'agents fixant les acides à température élevée, et, dans le cas où $R_4$ dans la formule VI est un groupe amino acylable, en faisant éventuellement ensuite réagir avec un composé introduisant le reste acyle ou le reste Z réactif avec les fibres.

15. Procédé selon la revendication 14, caractérisé par le fait que la réaction du composé anthraquinonique de formule VI avec le phénol de formule VII est réalisée à une température comprise entre 180 et 240 °C, en particulier à 220 °C.

16. Procédé de préparation de nouveaux colorants anthraquinoniques solubles dans l'eau, qui, sous la forme de l'acide libre, correspondent à la formule III

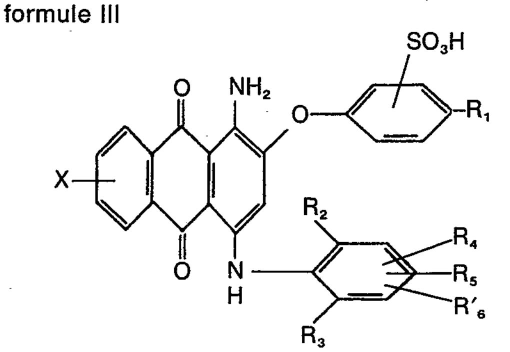

(III)

où X représente un halogène; $R_1$ un reste alkyle ramifié ou non-ramifié ayant 4 à 8 atomes de carbone; $R_2$ et $R_3$, indépendamment l'un de l'autre, chacun un reste alkyle ramifié ou non-ramifié ayant 1 à 4 atomes de carbone; $R_4$ l'hydrogène, un reste alkyle ramifié ou non-ramifié ayant 1 à 4 atomes de carbone, un groupe amino éventuellement acylé ou le groupe –NHZ, où Z représente un reste réactif avec les fibres; $R_5$ l'hydrogène ou un reste alkyle ramifié ou non-ramifié ayant 1 à 4 atomes de carbone; $R'_6$ l'hydrogène, un halogène ou un reste de formule $-CH_2-NH-CO-Y$, où Y représente un reste alkyle ou alcényle ayant 1 à 4 atomes de carbone, éventuellement substitué par un ou deux atomes d'halogène, ou bien un reste

phényle éventuellement substitué par de l'halogène ou un reste alkyle ayant 1 à 4 atomes de carbone, caractérisé par le fait que l'on désulfone un composé anthraquinonique de formule IV

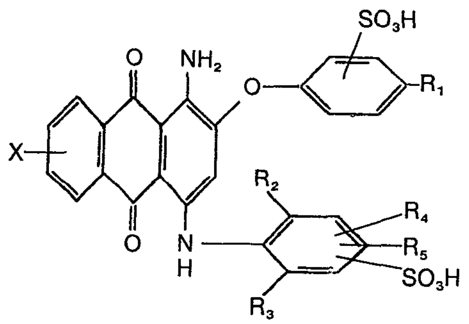

(IV)

où X, $R_1$, $R_2$, $R_3$, $R_4$ et $R_5$ ont la signification indiquée ci-dessus, dans le noyau aniline avec de l'acide sulfurique aqueux à 60 à 90%, à une température comprise entre 80 et 120 °C, ou avec du sulfolane à une température comprise entre 180 et 220 °C, et que l'on fait ensuite éventuellement réagir le produit avec un agent donneur d'halogène, ou bien on le fait réagir en milieu acide avec un N-méthylolamide, qui porte sur l'atome d'azote le groupe –COY, où Y a la signification indiquée ci-dessus.

17. Procédé selon la revendication 16, caractérisé par le fait que la désulfonation du composé anthraquinonique de formule IV est réalisée avec de l'acide sulfurique aqueux à 80%, à une température de 110 °C.

18. Procédé selon la revendication 16, caractérisé par le fait que la désulfonation du composé anthraquinonique de formule IV est réalisée avec du sulfolane à une température de 210 °C.

19. Procédé de préparation de nouveaux colorants anthraquinoniques solubles dans l'eau, qui, sous forme de l'acide libre, correspondent à la formule IV

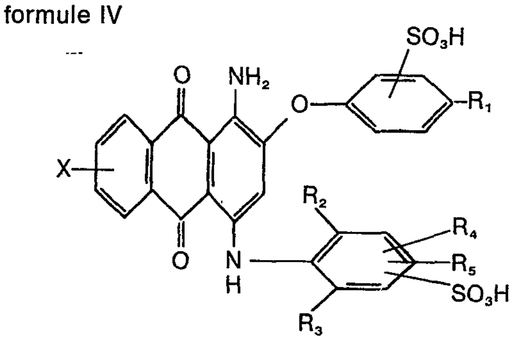

(IV)

où X représente un halogène; $R_1$ un reste alkyle ramifié ou non-ramifié ayant 4 à 8 atomes de carbone; $R_2$ et $R_3$, indépendamment l'un de l'autre, chacun un reste alkyle ramifié ou non-ramifié ayant 1 à 4 atomes de carbone; $R_4$ l'hydrogène, un reste alkyle ramifié ou non-ramifié ayant 1 à 4 atomes de carbone, un groupe amino éventuellement acylé ou le groupe –NHZ, où Z représente un reste réactif avec les fibres; $R_5$ l'hydrogène ou un reste alkyle ramifié ou non-ramifié ayant 1 à 4 atomes de carbone, caractérisé par le fait que l'on sulfone un composé anthraquinonique de formule V

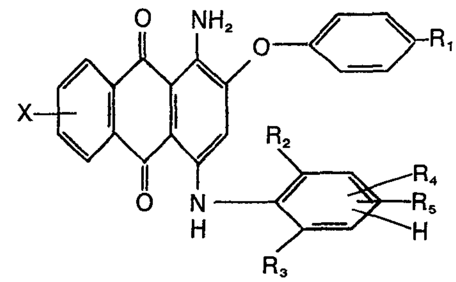

(V)

où X, $R_1$, $R_2$, $R_3$, $R_4$ et $R_5$ ont la signification indiquée ci-dessus, à une température comprise entre 10 et 40 °C, avec de l'oléum contenant 1 à 20% d'anhydride sulfurique libre, de façon à ce que deux groupes sulfoniques soient introduits, et, dans le cas où $R_4$ dans la formule V est un groupe amino acylable, on fait ensuite réagir éventuellement avec un composé transmettant le reste acyle ou le reste Z réactif avec les fibres.

20. Procédé selon la revendication 19, caractérisé par le fait que l'on réalise la sulfonation à une température d'environ 20 °C avec de l'oléum, contenant 5 à 10% d'anhydride sulfurique libre.

21. Utilisation des colorants anthraquinonique solubles dans l'eau selon la revendication 1, pour la teinture ou l'impression des matières textiles, avant tout des matières naturelles ou synthétiques en polyamides.

22. La matière textile teinte ou imprimée avec les colorants anthraquinoniques selon la revendication 1, avant tout la matière naturelle ou synthétique en polyamide.